# EUROPEAN PATENT APPLICATION

(11) **EP 1 434 153 A1**
(43) Date of publication of application: **30.06.2004**
(21) Application number: 03018156.4
(22) Date of filing: 08.08.2003
(51) Int. Cl.: G06F 17/60, G06F 17/30, H04Q 7/22

(54) **Advertisement management method**

(30) Priority: 24.12.2002 JP 2002373229; 07.02.2003 JP 2003031666
(71) Applicant: Hitachi, Ltd., Chiyoda-ku, Tokyo 101-8010 (JP)
(72) Inventor: Nakazawa, Hideo, Hitachi, Ltd., Intel. Prop. Group, Chiyoda-ku, Tokyo 100-8220 (JP); Kitta, Haruhito, Hitachi, Ltd., Intel. Prop. Group, Chiyoda-ku, Tokyo 100-8220 (JP); Ogawa, Keisuke, Hitachi, Ltd., Intel. Prop. Group, Chiyoda-ku, Tokyo 100-8220 (JP); Hirota, Atsunobu, Hitachi Ltd., Intel. Prop. Group, Chiyoda-ku, Tokyo 100-8220 (JP)
(74) Representative: Strehl Schübel-Hopf & Partner

(57) **Abstract**

The present invention relates to a technology for distributing information including an advertisement. According to the present invention, upon periodically distributing information to a terminal device from a server, e.g., once a day, history information distributed previously is transmitted to the server from the terminal device. Further, according to the present invention, contents and an order of information to be subsequently distributed are changed by use of the history information.

## Description

### BACKGROUND OF THE INVENTION

### Field of the Invention

The present invention relates to information distribution to a terminal device including a mobile terminal. In particular, the present invention relates to an advertisement management method, a mobile terminal, a program, a recording medium, and an advertisement distribution server for distributing an advertisement to a mobile phone.

### Description of the Related Art

A so-called hanging advertisement is presented in vehicles of public transportation such as a train. Passengers who must ride on a crowded train irrepressibly and must commute recognize the hanging advertisement as one important medium for various functions including not only the presentation of advertisement but also the easy transmission of social situation and cultural trend.

The hanging advertisement has the abovementioned obvious functions. However, the advertisement which is not visually recognized by the passengers is presented in the single vehicle, or the advertisement is presented to the passengers only for several days as the cycle of presentation and the degree of visual recognition is low. Of course, the hanging advertisement presented in the different vehicle of one line cannot freely be viewed by the passengers in another line. Further, if information described in the hanging advertisement is advantageous for one passenger, he can neither remember nor use the information.

By solving the above problems, the passengers do not need to note or memorize important information described in the hanging advertisement in the train and easily browse it and, when the advertisement is replaced or is changed every predetermined term, it is easily searched and the attention to the advertisement can quantitatively be determined. Then, in order to solve the above problems, Japanese Unexamined Patent Application Publication No. 2002-41961 discloses an advertisement distribution system for periodically distributing advertisement data to a plurality of advertisement display terminals via a network from a server for storing the advertisement data, and for radio connecting a desired advertisement to the advertisement display terminal for displaying the advertisement displayed in the present or past by a mobile terminal so as to browse the advertisement. The advertisement distribution system disclosed in Japanese Unexamined Patent Application Publication No. 2002-41961 comprises: means for specifying the advertisement display terminal connected by the mobile terminal; means for forming an advertisement selecting form for selecting the desired advertisement by the mobile terminal from the advertisements displayed on the specified advertisement display terminal and the advertisement displayed in the past; and transmitting means for transmitting, to the mobile terminal, the desired advertisement data and advertisement information for the mobile terminal for storing information, e.g., a title of the advertisement data transmitted to the mobile terminal and a file name of the advertisement data for the mobile terminal corresponding to the advertisement data.

### SUMMARY OF THE INVENTION

However, the above-described advertisement distribution system as one conventional art has problems to be solved. That is, a sequence for browsing information including the advertisement information by a user and a terminal for browsing has a problem that the convenience for the user's operation is low. In an information distribution technology according to another conventional art, the user needs to access a predetermined site by in-operation of keys step by step by use of a Web browsing function and needs to browse information.

Therefore, the user must perform the complicated key-operation so as to view the information, such as the hanging advertisement, distributed to the terminal device, and the appeal effect of the advertisement, e.g., percentage point of reach might be reduced. The abovementioned danger is similar to the case of processing for setting the user's desired advertisement displayed on the mobile terminal in accordance with an instruction via the mobile terminal according to the one conventional art.

In particular, it is considered that the hanging advertisement hung in the vehicle is browsed during a busy moving time such as commuting time. The abovementioned key operation is requested to the user and this really does not consider the user's convenience.

That is, under the current situation of the above information distribution, the sufficient amount of information is not collected with necessary frequency when the advertisement effect is analyzed and the marketing research is performed by collecting browsing history on the distributed information, e.g., the advertisement information. In particular, according to the conventional arts, since the convenience is reduced and the load of packet communication charge is increased in the mobile phone, the users for receiving services of the advertisement distribution cannot be assured.

The present invention is devised in consideration of the above-described problems. It is one object of the present invention to distribute information conveniently. Further, it is another object of the present invention to provide advertisement management for accurately estimating the advertisement effect.

In order to accomplish the objects, according to the present invention, upon receiving information distributed from an information distributing device, a terminal device transmits information related to information which is previously received before the reception. Further, according to the present invention, upon receiving the related information from the terminal device, the information distributing device may distribute preset information or may periodically distribute new information. In this case, the distributed information may be changed based on the related information. Furthermore, the related information may include history information indicating which processing is executed for the distributed information. The history information may include a display order of the distributed information, time for displaying the information, and display time. The distribution of information may include a downloading operation. In addition, according to the present invention, the distributed information may include so-called advertisement information and news.

The present invention includes the following embodiments. According to the present invention, there is provided an advertisement management method for managing advertisement information by use of a mobile terminal, comprising the steps of, on the mobile terminal: detecting coming of a preset timing for distributing a advertisement; transmitting, to an advertisement distribution server on a network, a request for distributing the advertisement based on preset contents of the and distributed advertisement; receiving advertisement information distributed from the advertisement distribution server in accordance with the request for distributing the advertisement; outputting the received advertisement information to an output interface; receiving, from an input interface, a request for changing an output format of the outputted advertisement information or for obtaining related information; transmitting the request to the advertisement distribution server; changing, in accordance with the request, the output format of the advertisement information or receiving the related information from the advertisement distribution server; and outputting, to an output interface, the advertisement information in the changed output format or the received related information.

Further, according to the present invention, there is provided a mobile terminal for managing advertisement information, comprising: means for detecting coming of a preset timing for distributing an advertisement; means for transmitting, to an advertisement distribution server on a network, a request for distributing the advertisement based on preset contents of the distributed advertisement; means for receiving the advertisement information distributed from the advertisement distribution server in accordance with the request for distributing the advertisement; means for outputting the received advertisement information to an output interface; means for receiving, from an input interface, a request instruction for changing an output format of the outputted advertisement information or for obtaining related information; means for transmitting the request instruction to the advertisement distribution server; means for changing, in accordance with the request instruction, the output format of the advertisement information or receiving the related information from the advertisement distribution server; and means for outputting, to the output interface, the advertisement information in the changed output format or the received related information.

Furthermore, according to the present invention, there is provided a program which enables a mobile terminal to execute a method for managing advertisement information, wherein the program comprises the steps of: detecting coming of a preset timing for distributing an advertisement; transmitting, to an advertisement distribution server on a network, a request for distributing the advertisement based on preset contents of the distributed advertisement; receiving advertisement information distributed from the advertisement distribution server in accordance with the request for distributing the advertisement; outputting the received advertisement information to an output interface; receiving, from an input interface, a request instruction for changing an output format of the outputted advertisement information or for obtaining related information; transmitting the request and instruction to the advertisement distribution server; changing, in accordance with the request instruction, the output format of the advertisement information or receiving the related information from the advertisement distribution server; and outputting, to the output interface, the advertisement information in the changed output format or the received related information.

Further, the present invention relates to a computer-readable recording medium with the advertisement management program recorded therein.

In addition, according to the present invention, there is provided a server for distributing advertisement information to a mobile terminal, comprising: means for receiving a request for distributing an advertisement from a mobile terminal on a network; means for extracting corresponding advertisement information from a database in accordance with the request for distributing the advertisement; means for distributing the extracted advertisement information to the mobile terminal; means for receiving, from the mobile terminal, a request for changing an output format of the advertisement information or for obtaining information related to the advertisement information; and means for changing, in accordance with the request, the output format of the advertisement information or extracting the related information from the database and for transmitting the information to the mobile terminal.

In addition, the problems and solving means of the present invention will obviously be understood with reference to the embodiment and the drawings of the present invention.

### BRIEF DESCRIPTION OF THE DRAWINGS

Fig. 1 is a diagram showing the structure of a system according to an embodiment of the present invention;
Fig. 2 is a block diagram showing functions of a mobile terminal according to the embodiment;
Fig. 3 is a flowchart for the outline of an advertisement management method according to the embodiment;
Fig. 4 is a flowchart for priority processing according to the embodiment;
Fig. 5 is a flowchart for a membershipping procedure for a non-member according to the embodiment;
Fig. 6 is a screen transition diagram for setting distribution contents according to the embodiment;
Fig. 7 is a diagram showing a structure example 1 for a table according to the embodiment;
Fig. 8 is a flowchart for advertisement distribution and processing of log information according to the embodiment;
Fig. 9 is a diagram showing an example of registering information (browsing only hanging advertisement) in a log database according to the embodiment;
Fig. 10 is a flowchart for counting processing of member log information according to the embodiment;
Fig. 11 is a diagram showing an example of the log information per member according to the embodiment;
Fig. 12 is a diagram showing an example of changing processing of logs in display order of the hanging advertisement according to the embodiment;
Fig. 13 is a diagram showing a magazine genre log according to the embodiment;
Fig. 14 is a diagram showing a telop table per genre according to the embodiment;
Fig. 15 is a screen transition diagram for turn processing of the hanging advertisement according to the embodiment;
Fig. 16 is a screen transition diagram for display processing of index and article according to the embodiment;
Fig. 17 is a flowchart for processing of purchase information according to the embodiment;
Fig. 18 is a screen transition diagram for processing of purchase information according to the embodiment;
Fig. 19 is a diagram showing a structure example 2 for a table according to the embodiment;
Fig. 20 is a diagram showing an example of a sequence for obtaining a purchase certification number according to the embodiment;
Fig. 21 is a flowchart for processing for counting information to an advertiser according to the embodiment;
Fig. 22 is a diagram showing a magazine ranking table of all the members in a counting database according to the embodiment;
Fig. 23 is a diagram showing an example of setting a keyword per advertisement information in an advertisement database according to the embodiment;
Fig. 24 is a diagram showing a keyword ranking table per member in the counting database according to the embodiment;
Fig. 25 is a diagram showing a keyword ranking table of all the members in the counting database according to the embodiment;
Fig. 26 is a diagram showing a campaign result table per product in the counting database according to the embodiment;
Fig. 27 is a diagram showing the outline for a method for returning an advertisement rate according to the embodiment;
Fig. 28 is a flowchart showing a sequence for processing for returning the advertisement rate according to the embodiment;
Fig. 29 is a screen transition diagram 1 of processing for notifying a return sum according to the embodiment;
Fig. 30 is a screen transition diagram 2 for processing for notifying the return sum according to the embodiment; and
Fig. 31 is a diagram showing a structure example 3 of the table according to the embodiment.

### DESCRIPTION OF THE PREFERRED EMBODIMENTS

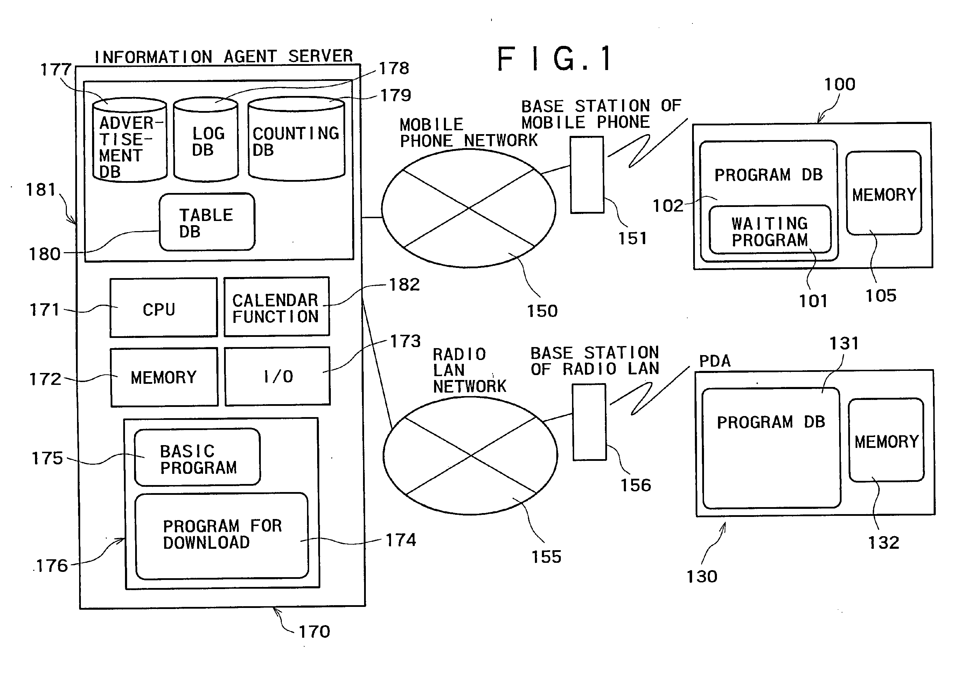

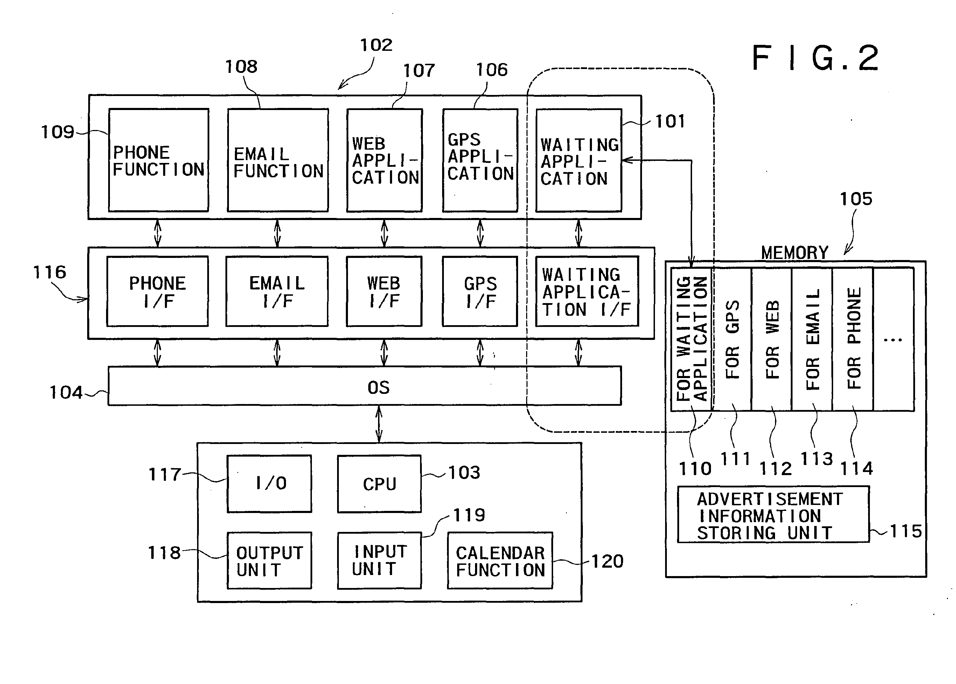

Hereinbelow, a detailed description is given of an embodiment of the present invention with reference to the drawings. Fig. 1 is a diagram showing the structure of a system according to the embodiment. A detailed description is given of a mobile terminal 100 with reference to a block diagram showing functions of the mobile terminal 100 shown in Fig. 2 according to the embodiment. For example, a mobile phone is assumed as the mobile terminal 100 according to the present invention, and stores a program for implementing an advertisement management method (a waiting program 101 in the drawing) of the present invention into a program database 102. A CPU 103 as a calculating device properly reads the program stored in the program database 102 to a memory 105 based on an OS (Operating System) 104, thereby executing the advertisement management method.

The program database 102 stores an application program which realizes an original function of the mobile terminal 100, in addition to the waiting program 101. In this example, the program database 102 includes GPS application 106, Web application 107, email function application 108, and phone function application 109.

On the other hand, the memory 105 ensures application programs and a proper storage area every function. In this example, the memory 105 includes an area 110 for the waiting program (shown as waiting application), an area 111 for GPS, an area 112 for Web, an area 113 for email, an area 114 for phone, and an advertisement information storing unit 115 serving as a storing area of the advertisement information obtained by the advertisement distribution server. Incidentally, the memory 105 in Fig. 2 indicates an example of the structure of the allocated areas 110 to 114 for storing the application 101 and 106 to 109. That is, Fig. 2 shows a relationship between functional blocks and the memory 105.

Upon reading the application program 101 and 106 to 109, the OS 104 uses an I/F (interface) unit 116 for every application program.

Further, the mobile terminal 100 as the mobile phone comprises: an I/O 117 which executes data communication, e.g., obtains the advertisement information by being connected to an information agent server 170 as the advertisement distribution server, via a mobile phone network 150 and a base station 151 of the mobile phone; an output unit 118 (output I/F) which executes output operation of the advertisement information; an input unit 119 (input I/F) which receives the user's selection and instruction; and a calendar function unit 120 which controls information on date and time so as to detect the timing for distributing the advertisement. The user browses the advertisement information such as the hanging advertisement and the information related thereto by use of the mobile terminal 100.

In place of the mobile terminal 100 such as the mobile phone, a PDA 130 can be used. In this case, various application programs are stored in a program database 131, similarly to the mobile terminal 100, and the advertisement management method according to the present invention is executed by a proper calculating device (not shown) and a memory 132 together therewith. The PDA 130 can communicate data with the information agent server 170 via a radio LAN network 155 and a base station 156 of radio LAN.

The information agent server 170 (hereinafter, referred to as the server 170) as an advertisement distribution server is connected to the abovementioned mobile terminal 100 via the mobile phone network 150 and the like. The server 170 comprises: a CPU 171 as a calculating device; a memory 172 used by the CPU 171 upon calculation; an I/O 173 for data communication with the mobile terminal 100 or the PDA 130 via the mobile phone network 150; and a program database 176 which stores a program 174 for download for distributing the waiting program 101 to the mobile terminal 100 and a basic program 175 originally included in the server 170. Further, the server 170 comprises a calendar function unit 182, in place of the calendar function unit 120 included in the mobile terminal 100.

Furthermore, the server 170 comprises databases 181 having: an advertisement database 177 for storing data such as the advertisement information, distributed to the mobile terminal 100; a log database 178 which stores history information such as the processing for the advertisement information in the mobile terminal 100; a counting database 159 which stores the result of counting the history information; and a table database 180 which stores tables required by the processing.

The server 170 with the above structure receives a request for distributing the advertisement from the mobile terminal 100, and extracts the advertisement information from the advertisement database 177 in accordance with the request for distributing the advertisement. The extracted advertisement information is distributed to the mobile terminal 100. When the mobile terminal 100 does not detect the timing for distributing the advertisement but the server 170 manages and detects the timing for distributing the advertisement of the mobile terminal 100, the server 170 finds the timing for distributing the advertisement by collating the timing for distributing the advertisement determined for every mobile terminal 100 with the calendar function unit 182.

The server 170 receives the history information on reception processing of various requests (for browsing and changing the layout and the distribution order of the advertisement information, and for obtaining the related information) for the advertisement information in the mobile terminal 100 therefrom as the distribution destination of the advertisement information and the history information on the processing corresponding to the reception, and stores the received information to the log database 178. The server 170 recognizes the advertisement with the highest browsing frequency at a predetermined time for every user, and calculates the attention degree for every advertisement of the user of the mobile terminal 100. The server 170 performs processing for determining the distribution order or the output format of the advertisement information in accordance with the attention degree.

On the other hand, the server 170 receives the request for changing the output format of the advertisement information or for obtaining the related information from the mobile terminal 100, and changes the output format of the advertisement information in response to the request. Alternatively, the server 170 extracts the related information from the advertisement database 177 and sends the extracted information to the mobile terminal 100. In the processing for changing the output format of the advertisement information, the server 170 changes one of a plurality of the distributed hanging advertisements by determining which hanging advertisement is outputted in front of the hanging advertisements (namely, rearrangement processing).

The advertisement database 177 stores data such as telop. The server 170 receives the request for distributing the telop from the mobile terminal 100 and, then, collates the request for distributing the telop with a telop table (stored in the table database 180) for determining a relationship between distributed telop information and at least one of the time of timing for distributing the telop, the user property, and the property of the advertisement information as a target for distributing the telop. Thus, the server 170 extracts the corresponding telop information and sends the extracted information to the mobile terminal 100.

Simultaneously with the operation for purchasing the advertised product based on the advertisement information by the user, the server 170 receives, from the mobile terminal 100, the advertisement information distributed to the mobile terminal 100 or product information received by the user via a screen for inputting purchase certification information (which will be described later) in the mobile terminal. Further, the server 170 extracts the corresponding product from the advertisement database 177 based on the product information or the advertisement information, and forms a product list. The formed product list is sent to the mobile terminal 100 and, further, the server 170 receives, from the mobile terminal 100, the product selected from the product list and the purchase certification information of the selected product. The server 170 executes authentication processing of the purchase certification information for the selected product, as will be described in detail later, after normal authentication, and registers points for each user in accordance with the purchase operation. The table database 180 manages user's information, e.g., the point, by generating a member management table (which will be described later).

Various history information on the users is accumulated in the server 170 by distributing various advertisement information such as the hanging advertisement as mentioned above. Then, the server 170 counts the history information on at least one of the user property, the property of the advertisement information, the distribution time of the advertisement information, receiving time of various requests to the advertisement information, the property of the obtained related information, the property of the obtained information on an appeal product or the property of the article information, and the purchase certification information. The result of the counting processing is notified to the advertiser and is used for the analysis of the advertisement effect and CRM (Customer Relationship Management). Alternatively, the result is presented to the user and, based on the result, he recognizes which advertisement and product interest him.

The waiting program 101 is structured by an object-oriented programming language such as Java (trademark registered). If the mobile terminal 100 accesses the server 170 via a WWW browser, the waiting program 101 is structured by Java applet. However, the program for implementing the advertisement management method of the present invention is not limited to the example structured by Java and can be used for any language and method for structuring the similar functions. Further, the waiting program 101 is only one example of the name of the program for implementing the advertisement management of the present invention. Therefore, any program for implementing the advertisement management method of the present invention can be used with the function for obtaining the advertisement information by the server 170.

The server 170 can suppress the external illegal break as a firewall server and can function as a WWW server. Or, the server 170 can function as an email server for communication with a partner of data communication. Further, it is assumed that the server 170 is commonly operated by provider companies (advertisers), or is provided for companies for the advertisement management service and is managed and operated by the companies.

The server 170 integrally includes the advertisement database 177, the log database 178, the counting database 179, and the table database 180 which form the databases 181. Further, they may integrally be operated via the network while being provided for another device.

The network for connecting the mobile terminal 100 and the server 170 can use not only a dedicated line and the Internet but also various networks, e.g., a WAN (Wide Area Network), LAN, electric-light line network, radio network, public line network, and mobile phone network. Further, preferably, a virtual dedicated network technology such as VPN is used because the communication is established with the improved security on the Internet.

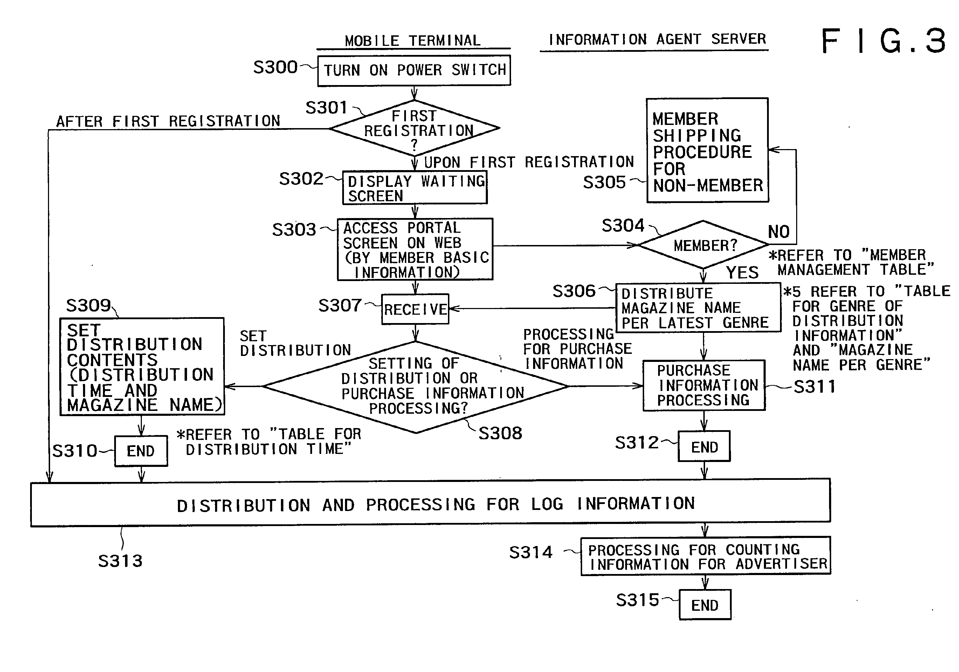

Fig. 3 is a flowchart for the outline of the advertisement management method according to the embodiment. Hereinbelow, a description is given of the actual sequence of the advertisement management method according to the present invention. The operation of the mobile terminal 100 is executed by a program included in the program database 102, and the operation of the server 170 is executed by a program included in the program database 176. These programs comprise codes for various operations, which will be described later. The advertisement information is at least one of image data and text data forming the hanging advertisement (hereinafter, the advertisement information is referred to as the hanging advertisement).

A power switch of the mobile terminal 100 is turned on (s300). It is assumed that the operation in step s300 is performed in the case in which the user initially turns on the power switch by operating the input unit 119 or the like, in the case in which a power management function (included or controlled by the waiting program 101) turns on the power at a predetermined timing, e.g., a timing for distributing the advertisement, and in the case in which the server 170 detects the predetermined timing such as the timing for distributing the advertisement and sends an instruction to the power management program.

As mentioned above, prior to the power on-operation of the mobile terminal 100 and the starting operation, the priority on the programs needs to previously be defined between original processing programs of the phone and the email on the mobile terminal 100 and the waiting program 101.

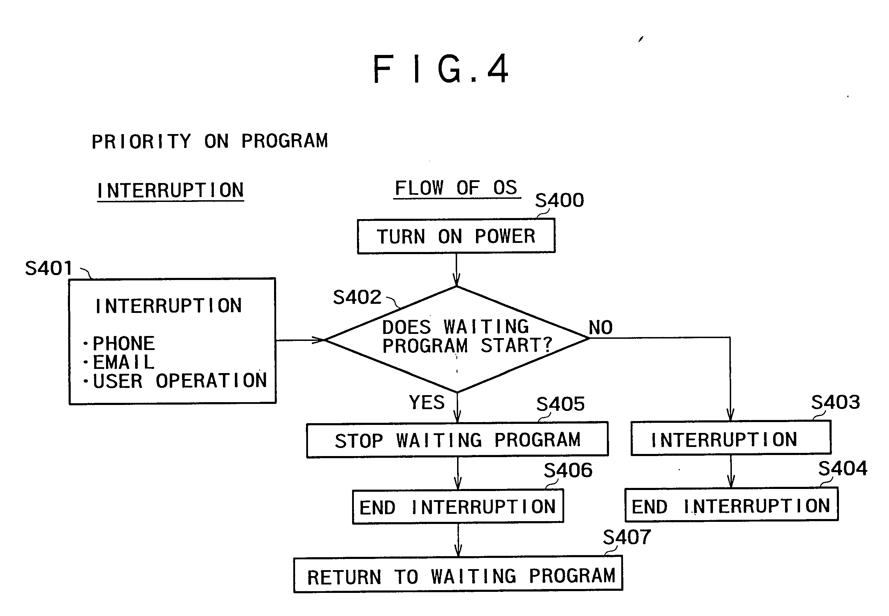

Fig. 4 is a flowchart for priority processing according to the embodiment. According to the advertisement management method of the present invention, when the user for receiving distribution services of various advertisement information such as the hanging advertisement contracts with a corporation of the server 170, it is assumed that he agrees that, mainly, the waiting program 101 runs on the mobile terminal 100. Therefore, in the mobile terminal 100, this processing is prioritized only upon interruption of processing for phone and email.

Hereinbelow, a description is given of the flow for priority processing. The power of the mobile terminal 100 is turned on as mentioned above (s400). In this state, processing for call and reception of the phone, namely, interruption is performed (s401). Then, the OS 104 of the mobile terminal 100 determines whether or not the waiting program 101 starts (s402).

If it is determined that the waiting program 101 does not start (NO in step s402), the phone function application 109 starts in accordance with the interruption, and the interruption is executed (s403). If the processing of the phone ends (s404), the mobile terminal 100 returns to the normal waiting state.

On the other hand, if it is determined that the waiting program 101 (YES in step s402), the OS 104 sends a stop instruction to the waiting program 101 (s405) and the waiting program 101 waits until the end of the interruption. If the interruption ends (s406), the OS 104 sends an instruction for return to the waiting program 101 and then the waiting program returns toe normal waiting state (s407).

Subsequently to the processing for turning on the power of the mobile terminal 100, it is determined whether or not the user has already been registered for the distribution service (s301). In the determination in step s301, it is recognized to whether or not the user's designation that he has already been registered is received via the input unit 119, or the mobile terminal 100 recognizes, by use of the memory 105, the presence or absence of information that the user has already been registered. If it is determined that the user has already been registered, the distribution and processing of the log information (s313) and processing of counting the information for the advertiser (s314) are properly executed and the processing ends (s315).

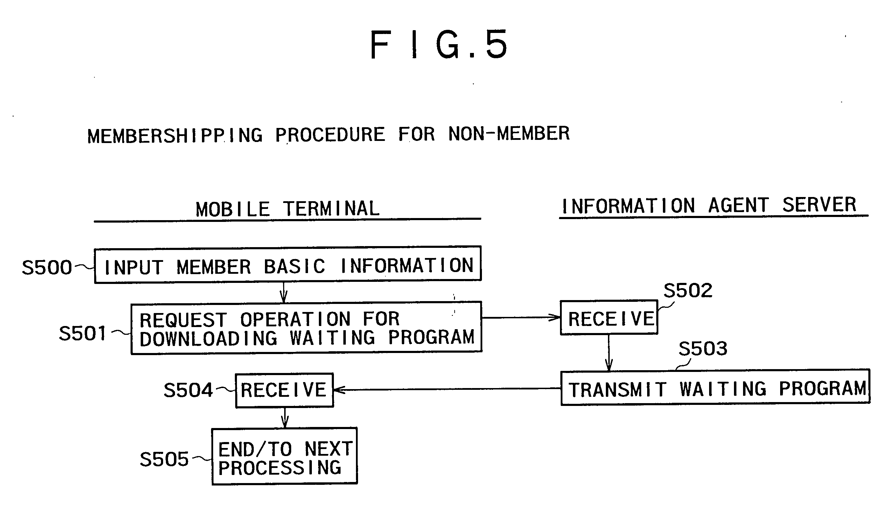

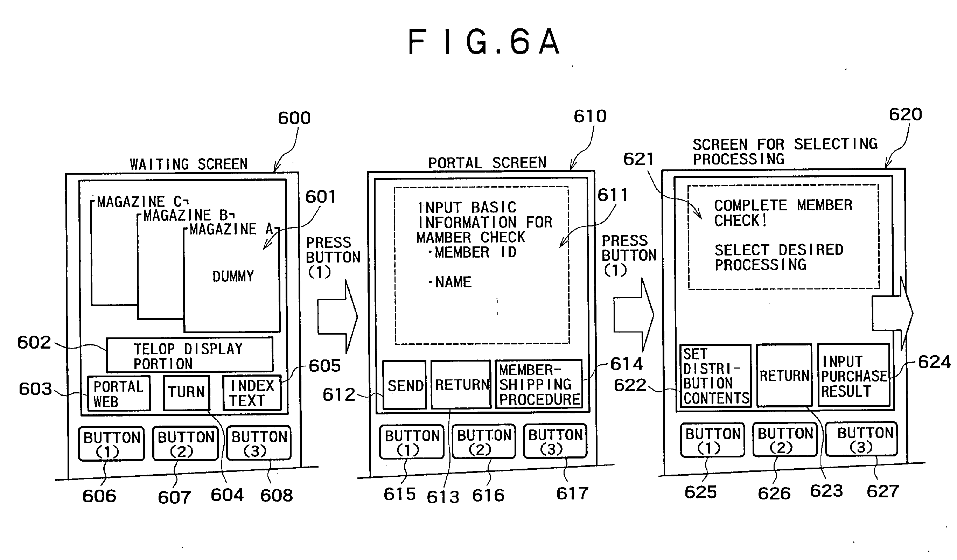

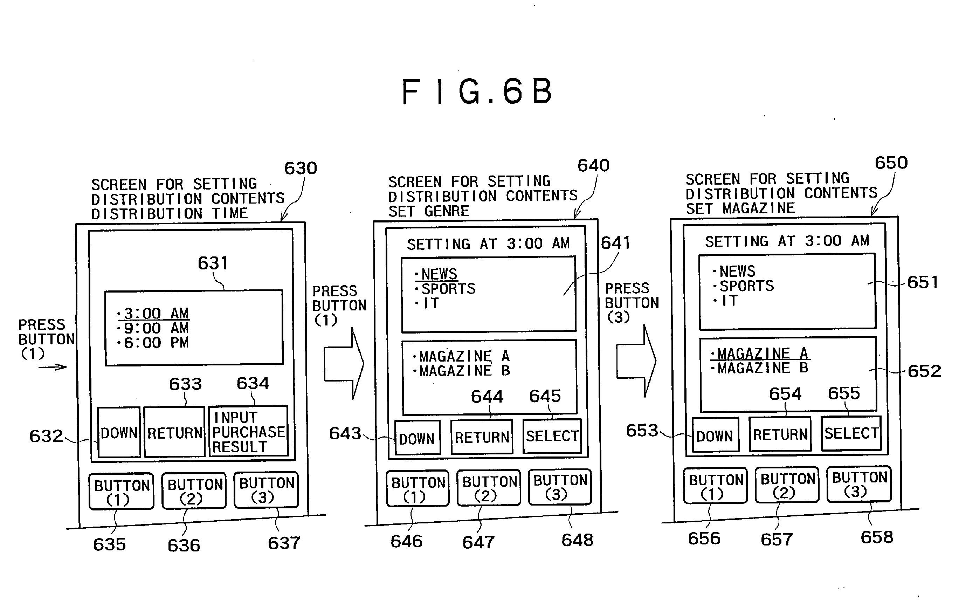

On the other hand, if it is determined that the user is first registered, member authentication processing and member registration processing are performed. Fig. 5 is a flowchart for a membershipping procedure for non-member according to the embodiment. Fig. 6 is a screen transition diagram for setting distribution contents according to the embodiment. The mobile terminal 100 displays a waiting screen 600 on the output unit 118 (s302), thereby entering a state for receiving the user's input.

Subsequently, the waiting screen 600 displays the hanging advertisement distributed by the server 170. The waiting screen 600 comprises: a hanging advertisement 601; a telop display portion 602 which displays a telop distributed corresponding to the hanging advertisement 601 and the distribution time thereof; a portal WEB portion 603 as a link to a portal site for providing various member services of the distribution services and the registration processing; a turn portion 604 which changes the arrangement order of the hanging advertisement 601; and an index text portion 605 which receives an instruction for obtaining index information of an article of the hanging advertisement 601. Incidentally, it is assumed that buttons 606 to 608 corresponding to functions of the portions 603 to 605 are assigned to any of buttons on the mobile terminal 100.

When the user presses the button 606 corresponding to the portal WEB portion 603 on the waiting screen 600, the mobile terminal 100 accesses a portal screen 610 provided by the server 170 in response to the button pressing operation (s303). On the portal screen 610, the input operation of basic information such as ID and name for member authentication is prompted in an input column 611. If proper information is inputted and a button 615 corresponding to a transmitting portion 612 is pressed, the basic information is sent to the server 170 from the mobile terminal 100.

The server 170 collates the basic information with a member management table 700 in the table database 180, and executes the member authentication processing (s304). If it is determined that the user is not the member (NO in s304), a membershipping procedure for non-member is executed (s305). In the processing in step s305, as shown in the flowchart of Fig. 5, the input of the basic information is received via the input unit 119 (s500) and a request for downloading the waiting program 101 including the processing in step s500 is transmitted to the server 170 (s501).

The server 170 receives the request (s502), and generates and registers a new member record for the user in the member management table 700 of the table database 180. After completing the registration, the server 170 sends the waiting program 101 to the mobile terminal 100 (s503).

The mobile terminal 100 receives the waiting program 101 (s504), stores the waiting program 101 in the corresponding area 110 (refer to Fig. 2) in the memory 105, and completes the membershipping procedure (s505).

If it is determined in the member authentication processing that the user is the member (YES in step s304), a screen 620 for selecting the processing is returned to the mobile terminal 100, a column 621 indicates the completion of member authentication. If the product appealed by the hanging advertisement 601 is a magazine, the server 170 extracts the latest magazine name every genre from (a table 720 for the magazine name every genre of) the table database 180. The latest magazine name per genre is distributed to the mobile terminal 100 (s306). The mobile terminal 100 receives the latest magazine name every genre (s307), and stores it in the memory 105.

At this time point, the user is the member for the distribution services. However, the proper advertisement distribution is not set to the user. That is, the registration for the distribution services is not performed to the user as the processing target. Therefore, the mobile terminal 100 receives the pressing operation of a button 625 corresponding to a portion 622 for setting the distribution contents from the user on the screen 620 for selecting the processing (s308).

The server 170 sequentially sends screens 630 to 650 for setting the distribution contents to the mobile terminal 100, and receives the inputs for setting the distribution time of the hanging advertisement, the advertisement genre, and setting indexes of the magazine in setting columns 631, 641, and 651 (s309). The server 170, which receives the setting indexes of the distribution contents by the user, records the distribution contents in the member management table 700 in the table database 180 with the correlation of the user, and ends the processing (s310).

After receiving the pressing operation of a button 627 corresponding to the purchase result input portion 624 on the screen 620 for selecting the processing, the purchase information processing is executed (s311), as will be described later. Then, the processing ends (s312).

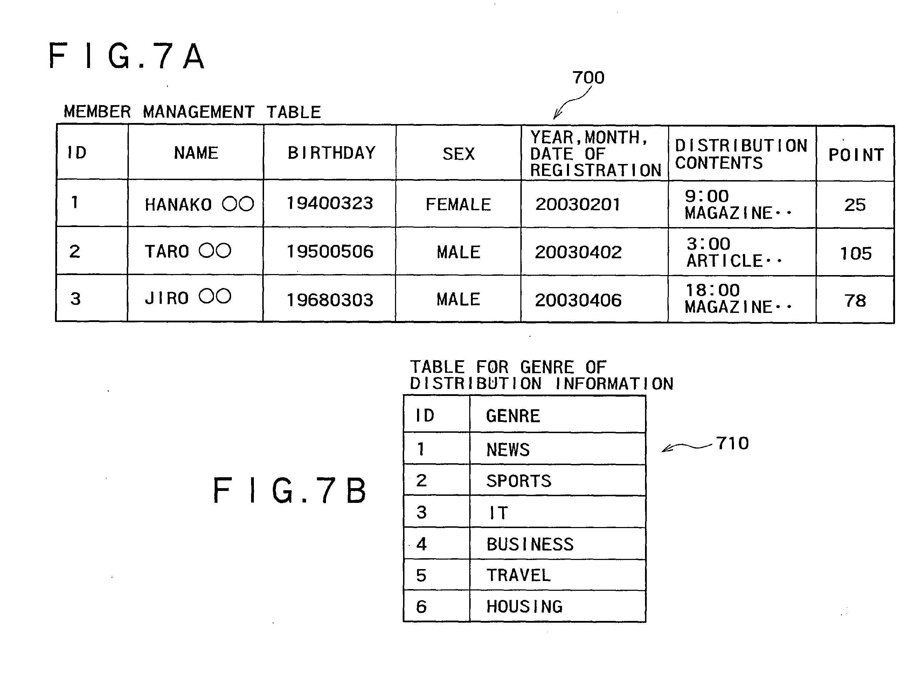

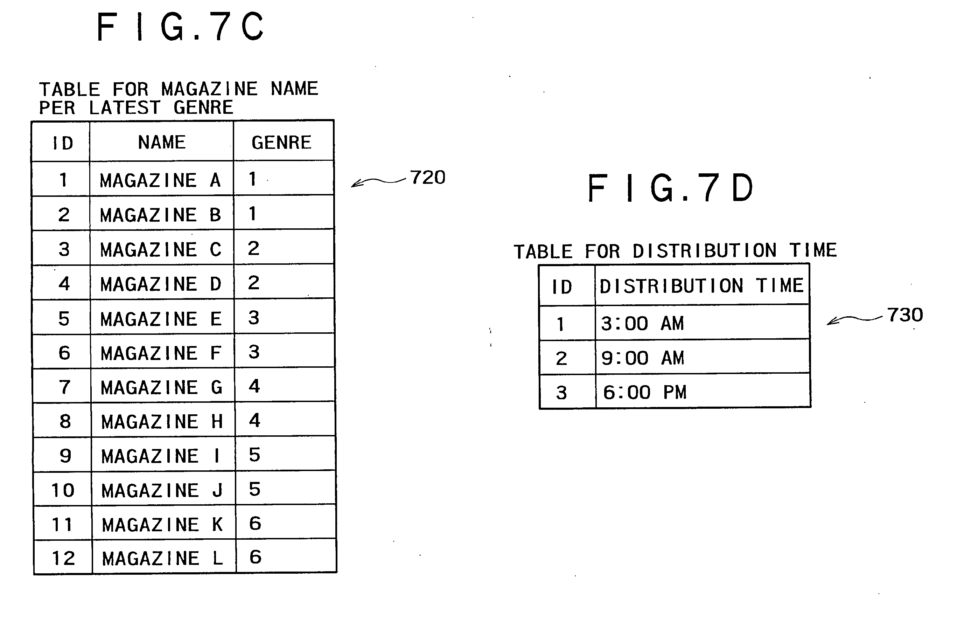

A description is given of the data structure of various tables included in the table database 180 of the server 170. Fig. 7 is a diagram showing a structure example 1 of the table according to the embodiment. As mentioned above, the member management table 700 stores various information of the user. The server 170 executes the member authentication by referring to the member management table 700. Further, server 170 records, to the member management table 700, the distribution contents of the advertisement information and the number of points corresponding to the browsing operation of the advertisement information. Therefore, the server 170 forms, every user by use of a user ID as a key, records related to various user information, such as the user's name, birthday, sex, year, month, and day of the registration, distribution contents, and the number of points.

As information for selecting the setting contents by the user on the screens 630 to 650 for setting the distribution contents, there are the genre of the advertisement information extracted from a genre table 710 of the distribution information, the magazine name extracted from the latest magazine name table 720 per genre, and the information on the distribution time extracted from the distribution time table 730.

The genre table 710 of the distribution information has the data structure related to the genre using a genre ID as the key. The latest magazine name table 720 per genre has the data structure related to information on the magazine name and the magazine genre. Further, the distribution time table 730 has the data structure related to the information on the distribution time using a time ID as the key.

As mentioned above, after completing the setting of the distribution and the processing for registering the member, the server 170 automatically distributes the advertisement information such as the hanging advertisement 601 to the mobile terminal 100 in accordance with the distribution contents registered by the user. Hereinlater, a description is given of steps of the distribution and processing of the log information (s313).

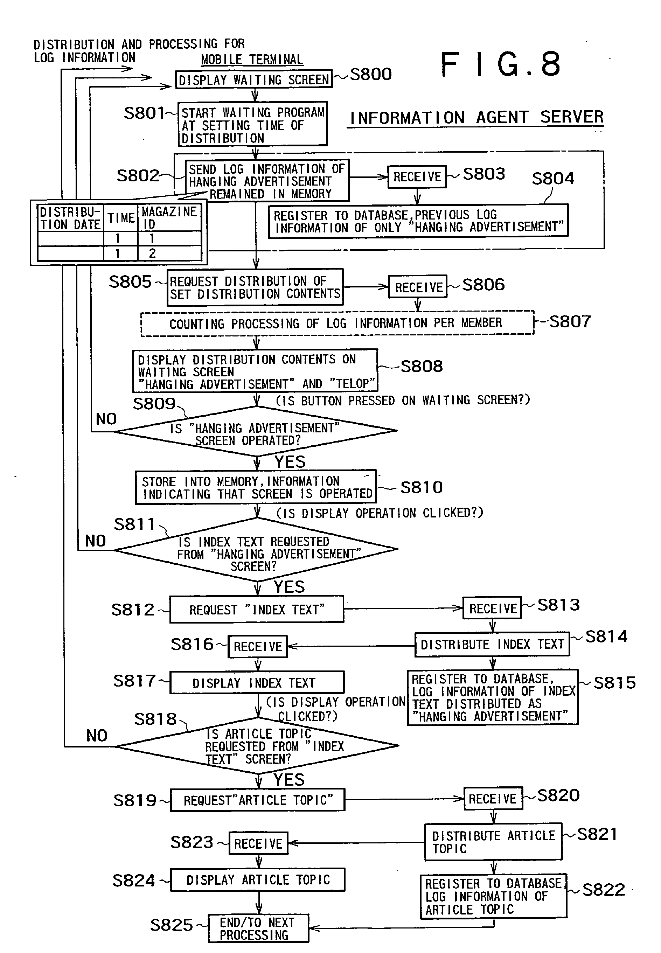

Fig. 8 is a flowchart for the distribution of the advertisement and the processing of the log information according to the embodiment. The mobile terminal 100 displays the waiting screen on the output unit 118 as mentioned above (s800). For example, a calendar function unit 120 of the mobile terminal 100 detects the coming of the timing for distributing the advertisement which is preset. The detection contents are recognized by the OS 104, and the waiting program 101 is read by the predetermined area 110 of the memory 105 from the program database 102 and they are started (s801).

Upon starting the waiting program 101, further, the OS 104 monitors the operating state of the mobile terminal 100 (e.g., the presence or absence of the communication, the amount of traffic, and the amount of various data processing), so that the occurrence timing of the operating state having a predetermined reference or less becomes the timing for distributing the advertisement.

In addition, the timing for distributing the advertisement may be recorded to the member management table 700 (storage memory) of the table database 180 in the server 170, and the calendar function unit 182 may receive the request for starting the waiting program 101 from the server 170 which detects the timing of distributing the advertisement. In this case, the mobile terminal 100 receives the request for starting the waiting program 101 and starts it.

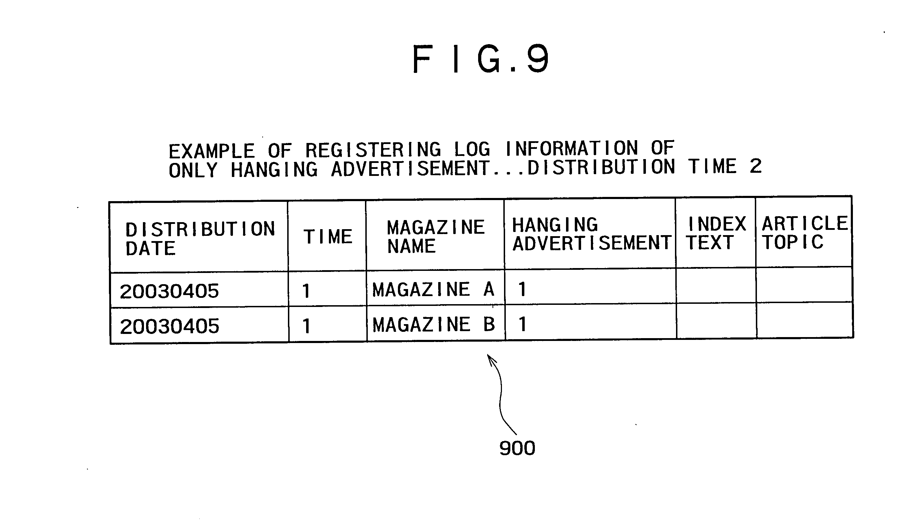

The started waiting program 101 transmits, to the server 170, log information 900 of the hanging advertisement stored in the memory 105 (history information on the browsing operation of the hanging advertisement) (s802). In the data format of the log information, the log information relates to the distribution time, magazine name (as the appealed product), the log of the hanging advertisement (flag indicating the browsing operation is performed or not, hereinafter, similarly referred to one), index text log, and article topic log (refer to Fig. 9).

These steps correspond to the case in which there is the history information on the browsing of only the hanging advertisement (though the related information of the hanging advertisement or the associated information, namely, detailed information is not browsed). For example, a hanging advertisement ID of the log information 1100 becomes the history information and it is sent to the server 170 at every start timing of the mobile terminal 100 or at a predetermined timing during the start operation. Incidentally, the log information is obtained by storing, to the memory 105 (storage device) of the mobile terminal 100, the history information on the reception processing of various requests or processing corresponding thereto sent via the input unit 119 in the mobile terminal 100.

The server 170 receives the log information transmitted from the mobile terminal 100 (s803), and stores it in the log database 178 (s804).

On the contrary, the mobile terminal 100 sends, to the server 170, a notification indicating the request for distributing the advertisement based on the advertisement distribution contents preset in the memory 105 (s805). The server 170 receives the notification (s806), and executes processing for counting the log information per member (s807). Or, upon recording the advertisement distribution contents every user to the member management table 700 of the server 170, the mobile terminal 100 sends, to the server 170, the user ID which is included in the request for distributing the advertisement, and thus, the server 170 may recognize the advertisement distribution contents corresponding to the user ID.

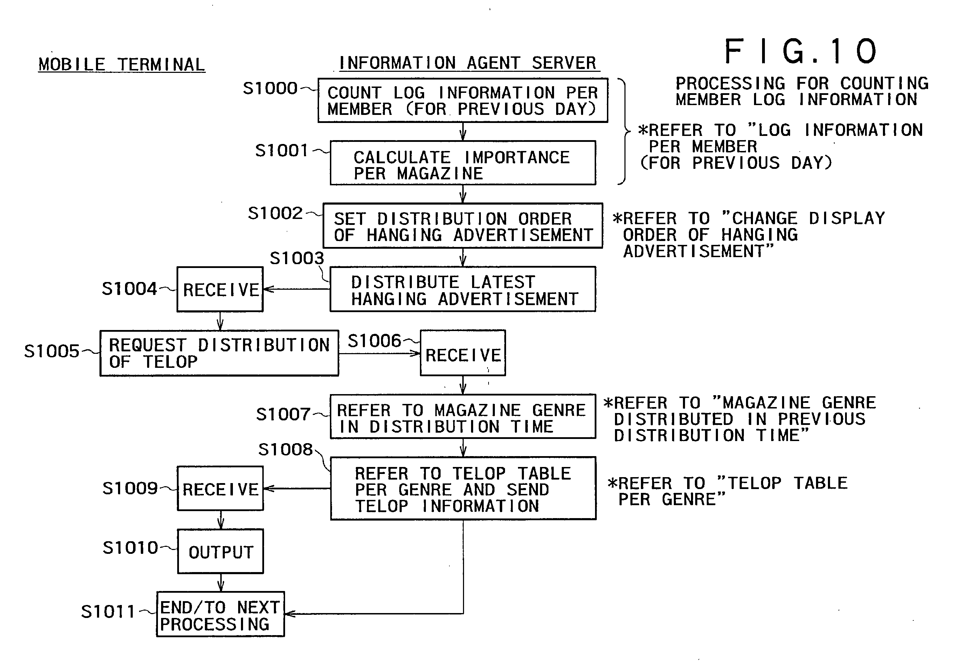

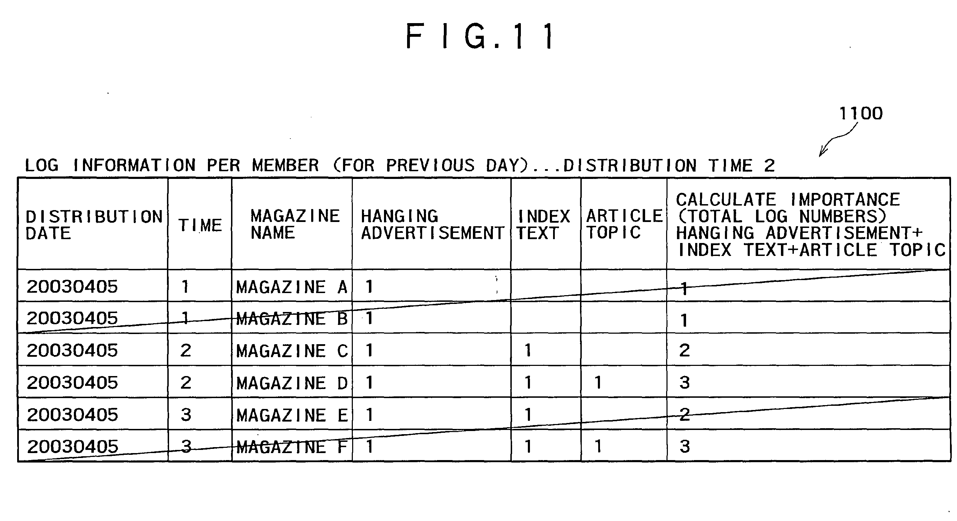

Here, a description is given of the processing for counting the log information (history information) per member (s807). Fig. 10 is a flowchart for the processing for counting the log information every member according to the embodiment. The serer 170 refers to the log information of the user in the log database 178. The log information 1100 having the data structure as shown in Fig. 11 is counted with respect to the previous day (s1000). Referring to Fig. 11, an example is shown for focusing the log information at the distribution time 2 (e.g., 9:00 AM, refer to the distribution time table 730 shown in Fig. 7).

The server 170 calculates the importance (attention degree) every advertisement of the user based on the log information 1100 (s1001). That is, it is possible to calculate how detailed information is requested by the user with respect to the hanging advertisement of which magazine by use of the log information 1100, by calculating the number of logs of "hanging advertisement", "index text", and "article topic". In the example of the log information 1100, the number of logs of the "magazine D" is totally "3", and it is recognized that the three logs indicate the highest importance for the user at the distribution time 2.

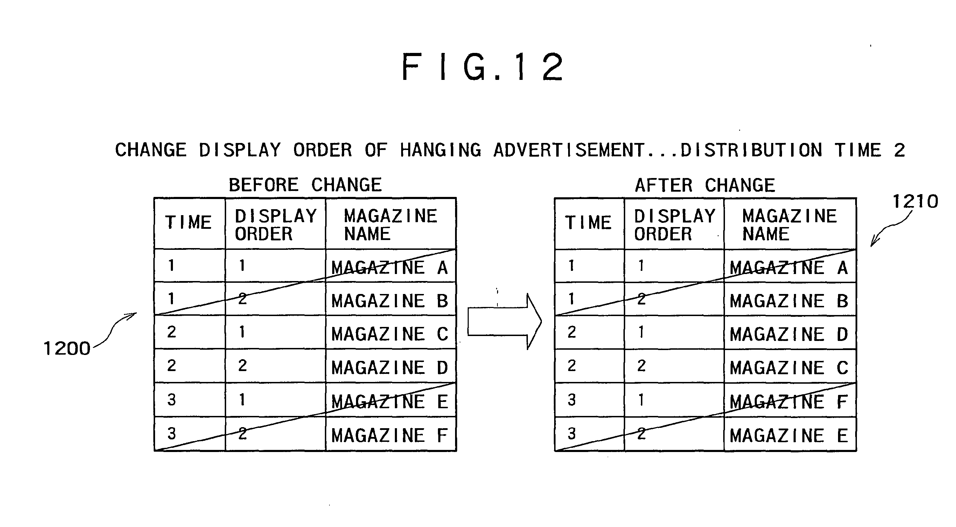

After calculating the importance, the server 170 determines the distribution order of the hanging advertisement in accordance with the importance (s1002). Fig. 12 is a diagram showing an example of change processing of the logs in display order of the hanging advertisement according to the embodiment. Since a plurality of hanging advertisements are always distributed to the mobile terminal 100, the arrangement of the hanging advertisement must be determined in the output unit 118 of the mobile terminal 100. Then, the server 170 calculates the importance at each time, and sets the advertisements so that the advertisement is displayed in front of the arrangement as the importance is higher. As shown by a log 1200 for the display order of the hanging advertisement, the display setting of the arrangement is performed before changing so that the "magazine C" is arranged at the first front point and the "magazine D" is arranged at the second front point. However, as shown by a log 1210 for the display order of the hanging advertisement, the display setting of the arrangement is performed after changing so that the arrangement before changing is replaced in response to a fact that the importance of the "magazine D" is the highest. After the arrangement order is determined as described above, the latest hanging advertisement is extracted from the advertisement database 177 in accordance with the determined arrangement order, the extracted hanging advertisement is distributed to the mobile terminal 100 (s1003).

The mobile terminal 100 receives the extracted hanging advertisement (s1004), and stores it in the advertisement information storing portion 115 of the memory 105. Further, the mobile terminal 100 displays the hanging advertisement on the output unit 118. In addition, the mobile terminal 100 detects the timing for distributing the advertisement, as the predetermined timing or the timing for executing predetermined processing after receiving the hanging advertisement, and sends a request for distributing a telop to the server 170 (s1005).

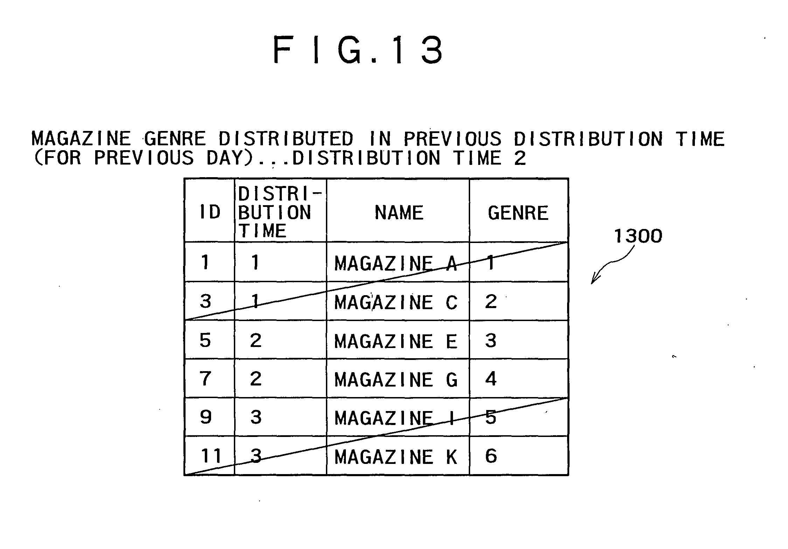

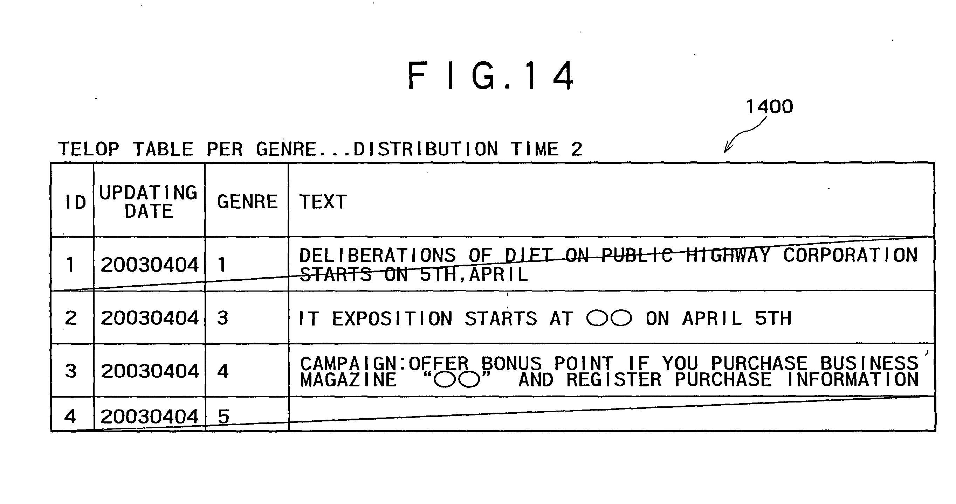

Fig. 13 is a diagram showing a magazine genre log according to the embodiment. Fig. 14 is a diagram showing a telop table ever genre according to the embodiment. The server 170 receives the request for distributing the telop (s1006), and collates the request for distributing the telop with tables (telop tables) 1300 and 1400 for determining a relationship between information on distribution telop and at least one of the time of the timing for distributing the telop, the user property, and the property of the hanging advertisement as the target of the distribution of the telop. As a result of the processing, the magazine genre is specified from the table 1300 and the telop information related to the specified magazine genre is extracted from the table 1400 (s1007 and s1008) .

The extracted telop information is transmitted to the mobile terminal 100 and the mobile terminal 100 receives the telop information (s1009). The telop information is outputted to the telop display portion which has already been shown, and the processing ends (s1010 and s1011).

After the server 170 distributes the hanging advertisement and the telop information to the mobile terminal 100, the mobile terminal 100 displays the hanging advertisement and the telop information on the waiting screen (s808). If the user does not operate the screen of the hanging advertisement after the display operation (NO in step s809), the waiting state continues.

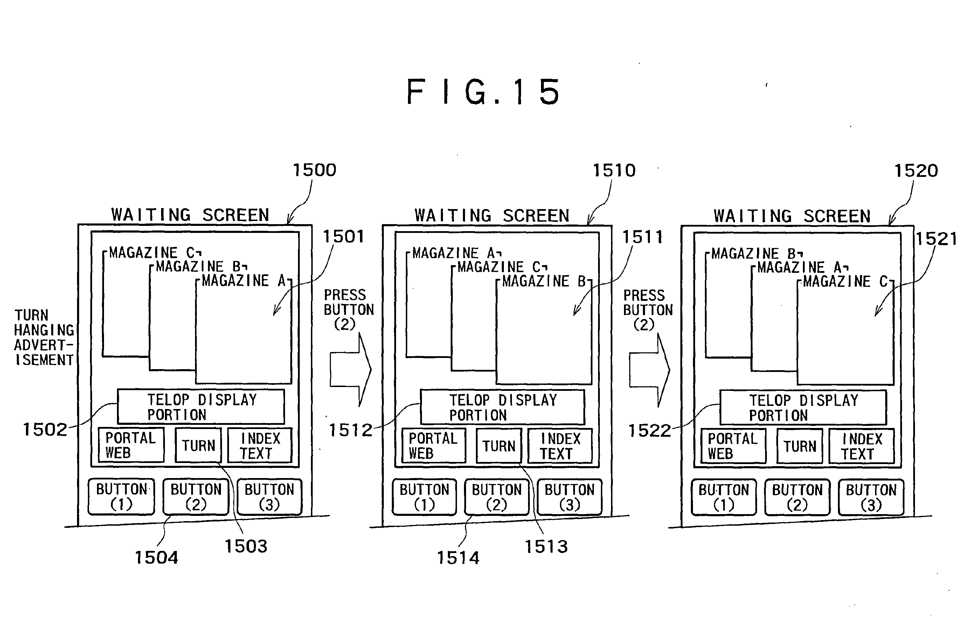

On the contrary, if any operation is performed on the screen (YES in step s809), information indicating that the operation is performed on the screen is stored in the memory 105 (step s810). It is assumed as the operation on the screen that the arrangement order of the hanging advertisement is replaced. Fig. 15 is a screen transition diagram for turn processing of the hanging advertisement according to the embodiment. Here, a waiting screen 1500 includes a hanging advertisement 1501 in which the distributed "magazine A", "magazine B", and "magazine C" are sequentially arranged. Further, the waiting screen 1500 includes the telop display portion 1502 for displaying the telop information and a turn portion 1503 for changing the arrangement of the hanging advertisement 1501 and for receiving the designation which of the "magazines A to C" is displayed in front of the arrangement. A button 1504 corresponding to the turn portion 1503 is set to the input unit 119 of the mobile terminal 100.

When the user presses a button 1504 corresponding to the turn portion 1503, the waiting program 101 which receives the input operation changes the arrangement of the hanging advertisement 1501. The waiting screens 1510 and 1520 indicate a state for the transition of the magazine A to B and magazine B to C displayed at the most front portion through the repetition of the change processing.

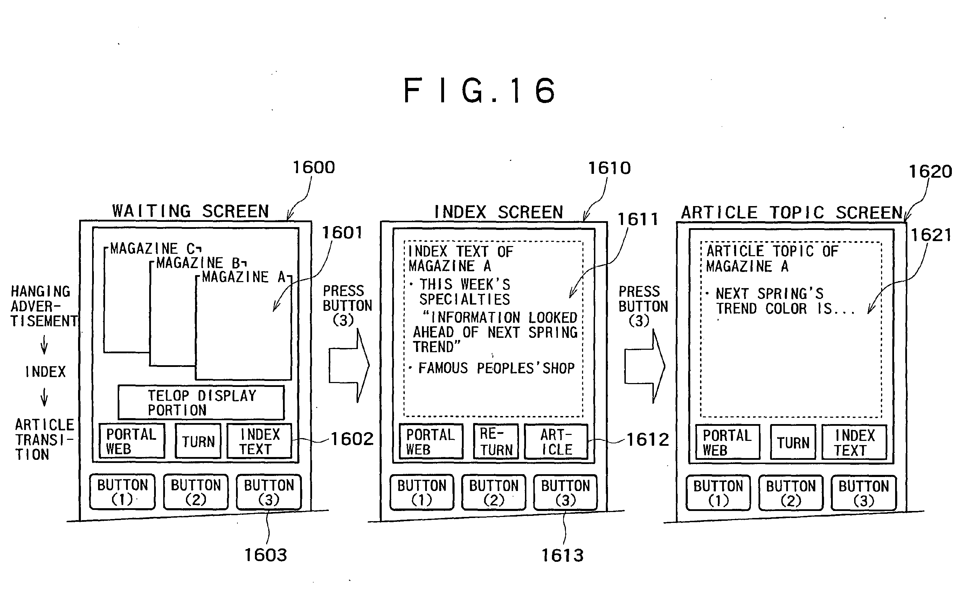

The user might desire the further detailed information of the hanging advertisement of the magazine browsed on any of the waiting screens 1500 to 1520. In this case, referring to Fig. 16, the user presses a button 1603 corresponding to an index text portion 1602 on a waiting screen 1600 (here, during browsing the "magazine A"). That is, it is recognized that the index text of the hanging advertisement is requested (YES in step s811). On the contrary, if the index text is not requested (NO in step s811), the waiting state continues.

If the index text is requested, the mobile terminal 100 receives the request and sends the request to the server 170 (s812). The server 170 receives the request (s813), and extracts information on the index text of the hanging advertisement from the advertisement database 177. Incidentally, the information on the index text is, e.g., data based on the text of the magazine index. The extracted information on the index text is distributed to the mobile terminal 100 (s814). On the contrary, upon the distribution processing of the information on the index text, the history on the processing is collated with the hanging advertisement and is stored in the log database 178 per user (s815).

The mobile terminal 100 receives the information on the index text (s816), and outputs the received information as information 1611 on the index text on the index screen 1610 (s817). Further, if the user presses a button 1613 corresponding to an article portion 1612 on the index screen 1610 (YES in step s818), the mobile terminal 100 receives the user's input operation, and sends, to the server 170, a request of the article topic related to the index (s819).

The server 170 receives the request (s820), and extracts the corresponding article topic from the advertisement database 177. The extracted article topic is distributed to the mobile terminal 100 (s821). In accordance with the distribution processing, the server 170 stores the log information of the processing into the log database 178. On the contrary, the mobile terminal 100 receives the log information (s823). The received information is displayed on an article topic screen 1620 as article topic information 1621 (s824), and the processing ends (s825).

Upon outputting the hanging advertisement on the waiting screen on the mobile terminal 100, the waiting program 101 sends an instruction for forming a background image such as a wallpaper or waiting image on the hanging advertisement to a function (processing unit) for setting the background image on the mobile terminal 100, and executes the output processing.

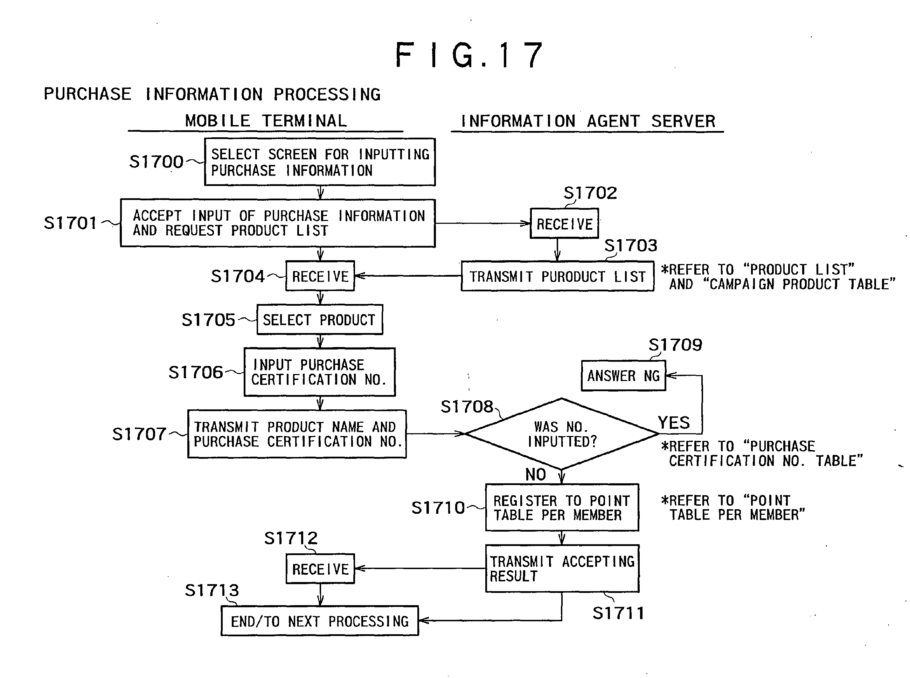

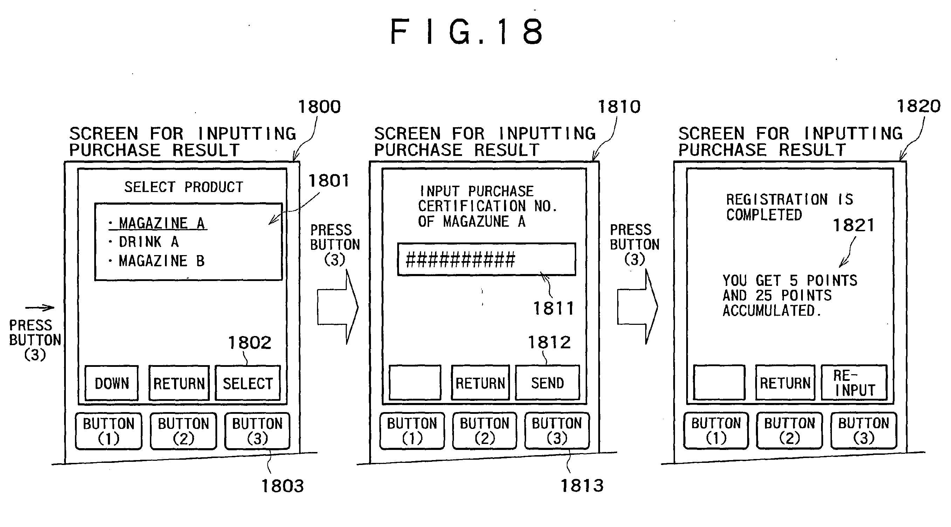

A description is given of purchase information processing (s311) mentioned above with reference to Fig. 3. The purchase information processing is performed after pressing a button 627 corresponding to a purchase result input portion 624 on the screen 620 for selecting the processing shown in Fig. 6. Fig. 17 is a flowchart for the purchase information processing according to the embodiment. Fig. 18 is a screen transition diagram for the purchase information processing according to the embodiment.

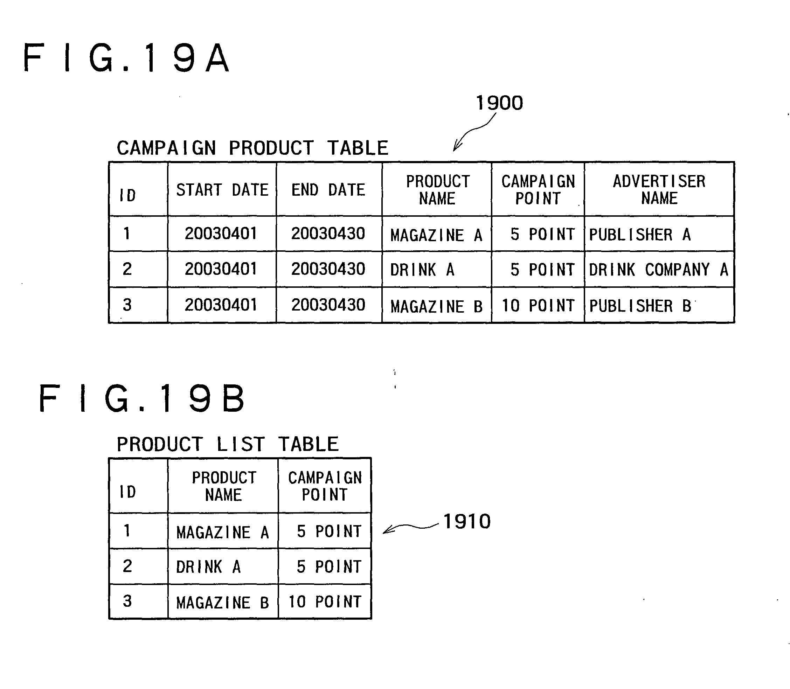

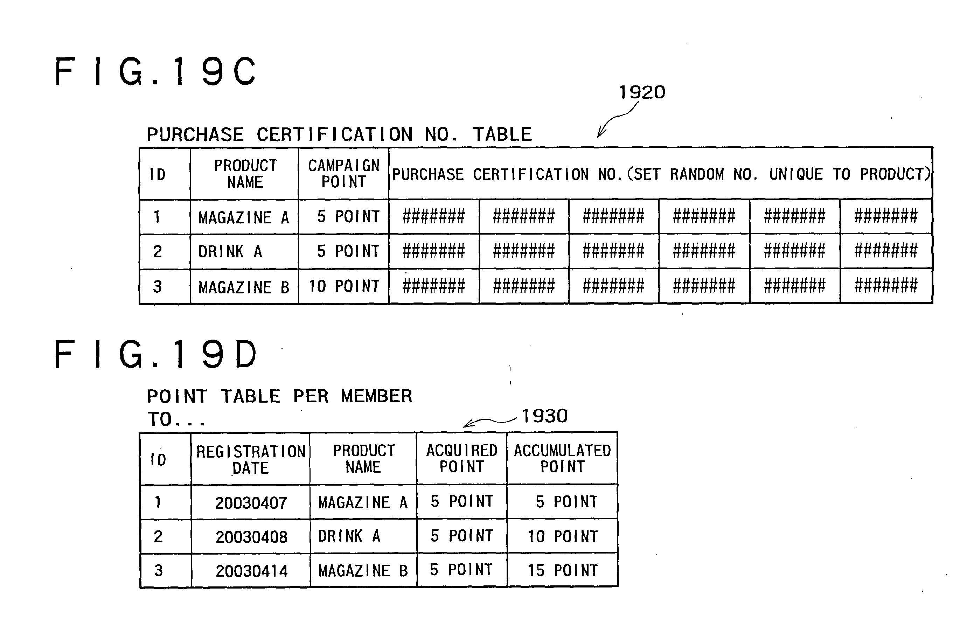

If the user presses a button 627 corresponding to the purchase result input portion 624 on the mobile terminal 100 (s1700), the mobile terminal 100 requests a product list for receiving the input of the purchase information to the server 170 (s1701). The server 170 receives the request (s1702), and generates the product list. The product list is generated by referring to a campaign product table 1900 and a product table 1910 (refer to Fig. 19), and the product within an advertisement term is extracted. The server 170 sends the product list to the mobile terminal 100 (s1703).

The mobile terminal 100 receives the product list together with a screen 1800 for inputting the purchase information result (s1704), and displays it. The screen 1800 for inputting the purchase information result includes a product selecting column 1801 for displaying the product list, a selecting portion 1802 as an interface for receiving the selection of the product from the product selecting column 1801, and a button 1803 corresponding to the selecting portion 1802.

Then, it is assumed that a proper product is selected from the product selecting column 1801 by button 1803 corresponding to the selecting portion 1802. The mobile terminal 100 recognizes an event indicating the selection of product (s1705), and receives the input of a purchase certification No. on a screen 1810 for inputting the purchase result (s1706). The user inputs the purchase certification No. to a No. input column 1811 on the screen 1810 for inputting the purchase result, and presses a button 1813 corresponding to a sending portion 1812. Then, the mobile terminal 100 sends the purchase certification No. and the information on the product name to the server 170 (s1707).

The server 170 receives the information, and determines whether or not the product has the number which was inputted (s1708). In step s1708, the product name is collated with the purchase certification No. in a table 1920 for the purchase certification No. (refer to Fig. 19) to which the purchase certification No. is correlated every the product. If it is determined that the purchase certification No. is one which was inputted (YES in step s1708), an answer indicating the reception for the input is YES is sent to the mobile terminal 100 (s1709).

If it is determined that the purchase certification No. is one which was not inputted (NO in step s1708), the number of points related to the product is recognized from the purchase certification table 1920, and it is registered to a record of the user in a point table 1930 every member (s1710). The server 170 transmits a result for receiving the processing as a screen 1820 for inputting the purchase result (s1711).

The data on the screen 1820 for inputting the purchase result is received by the mobile terminal 100 (s1712), and is displayed. A result of registering the purchase certification No. and the number of obtained points, as result information 1821, are displayed on the screen 1820 for inputting the purchase result. The number of points is used for the basis for providing the services to the user, e.g., cash-back upon purchasing the product in accordance with the number of points. Therefore, the user who purchases the product rises his motivation for registering the purchase information to the server 170.

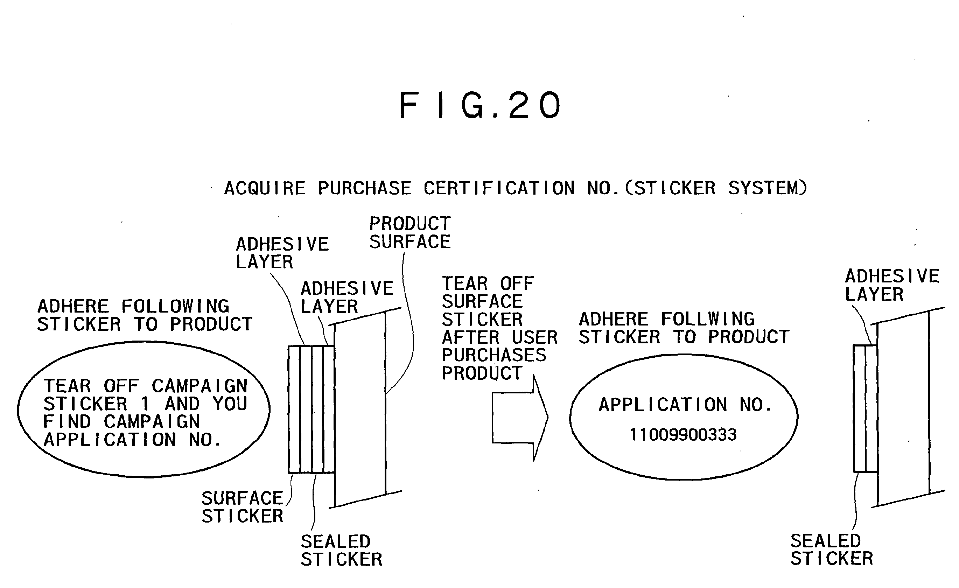

Fig. 20 is a diagram showing an example for the input sequence of the purchase certification No. according to the embodiment. As a method for obtaining the purchase certification information by the user, a sticker has the purchase certification No. printed on a surface of an adhering layer of a product surface shown in Fig. 20, and the sticker is properly sealed and is adhered. Further, the user purchases the product, removes the sealing means (surface sticker), and gets the sticker. The user inputs the purchase certification information printed on the sticker from the mobile terminal 100.

If a reader function in the mobile terminal 100, for the purchase certification No. (information) outputted to the sticker (medium) reads the purchase certification No., user's manual input operation is omitted. In this case, the reader function inputs the purchase certification No. to the mobile terminal 100.

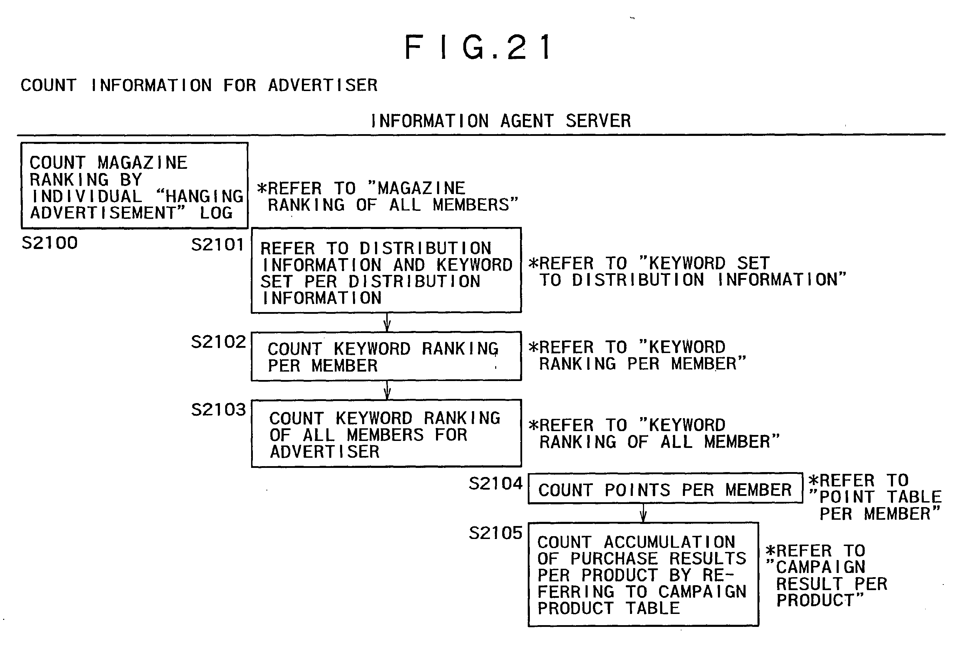

The server 170 has means for counting and utilizing the log information (history information). Fig. 21 is a flowchart for the counting processing of the information for the advertiser according to the embodiment. The server 170 counts the log information, in the log database 178, on the purchase certification information and at least one of the user property (e.g., age, sex, residence), the property of the advertisement information (e.g., magazine name and genre), distribution time of the advertisement information, receiving time of various requests for the advertisement information, the property of the obtained related information (index text and the article topic), the property of the desired appeal information and the property of the article information.

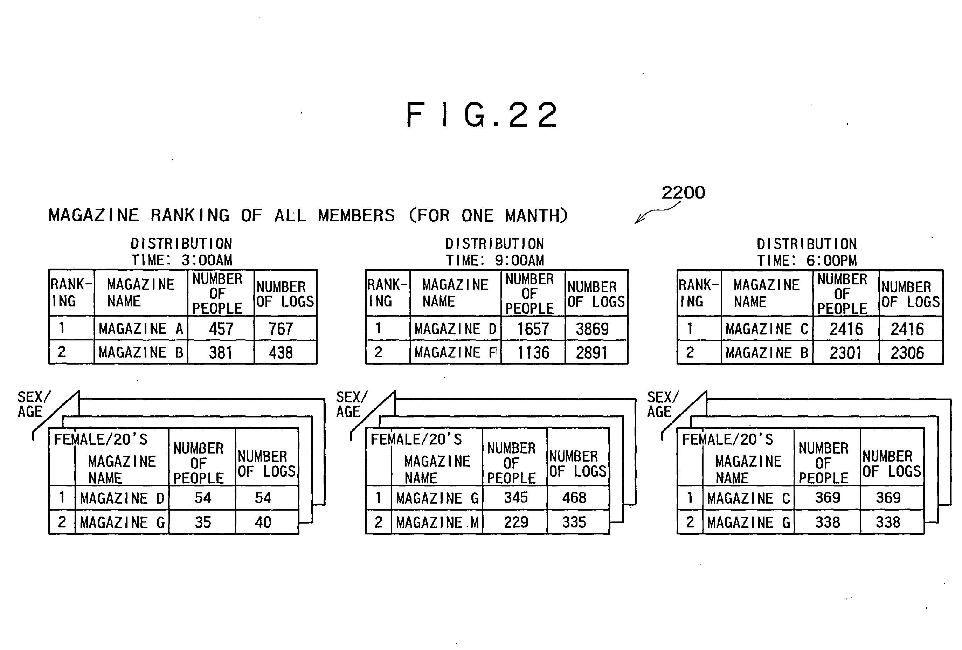

The server 170 counts the logs of the hanging advertisement of the log information 1100 every member (user) shown in Fig. 11, and thus generates the magazine ranking indicating at which degree the hanging advertisement of which magazine is browsed (s2100). If the counting operation is performed for all the members, a magazine ranking table of all the members (users) shown in Fig. 22 is generated. The ranking counting is performed every distribution time of the hanging advertisement and the ranking is counted every user's sex and user's age.

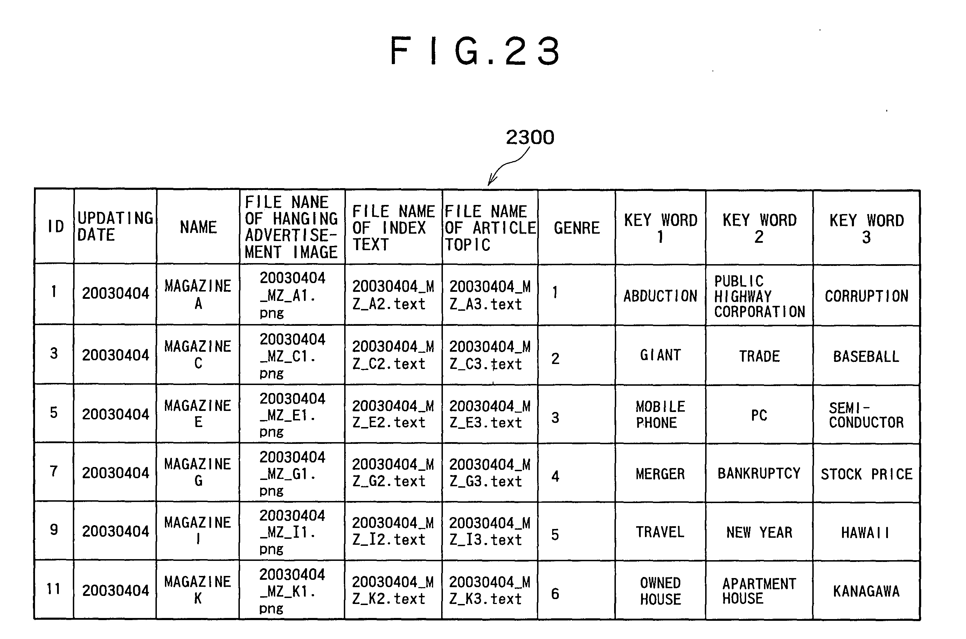

A keyword related to the distribution history every user and the distributed hanging advertisement is recognized by referring to the log database 178 and the advertisement database 177 (s2101). Fig. 23 is a diagram showing an example for setting the keyword every advertisement information in the advertisement database according to the embodiment. Data on the keyword is set to each magazine in addition to the an image file name of the hanging advertisement, index text file name, article topic file name, and magazine genre.

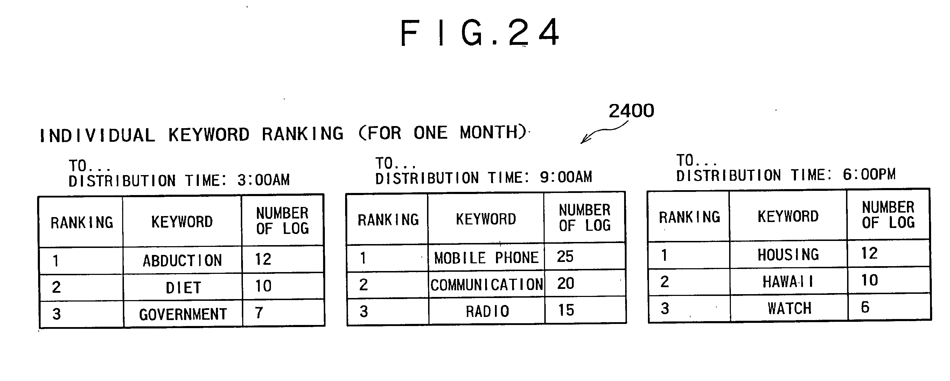

The server 170 counts the related keyword every member (user), and generates the keyword ranking (s2102). Fig. 24 is a diagram showing a keyword ranking table 2400 every user in the counting database according to the embodiment. The above-generated keyword ranking every user may be provided to not only the advertiser but also the user via the mobile terminal 100.

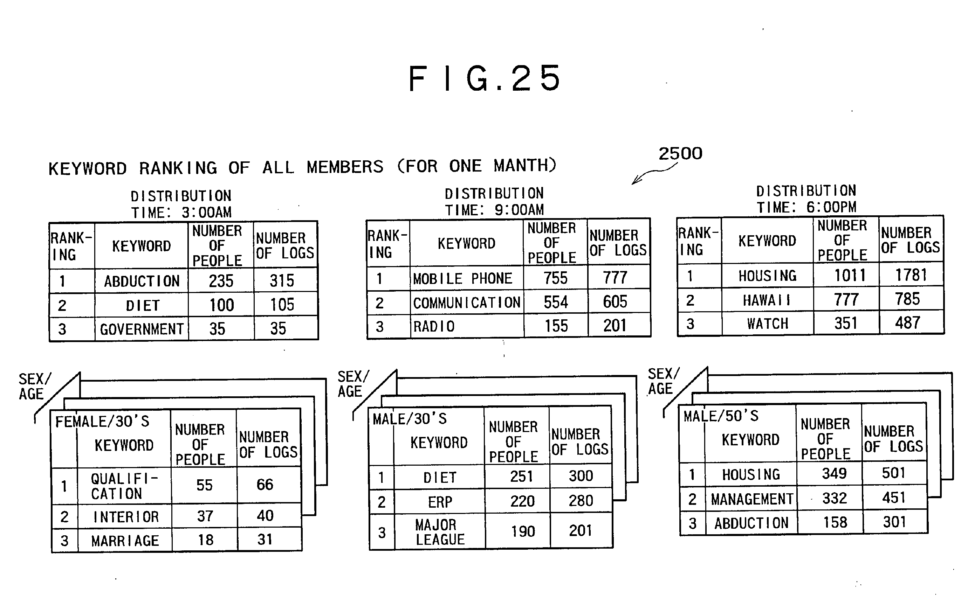

After generating the keyword ranking every user, the ranking is counted for all the members and the keyword ranking for all the members is generated (s2103). Fig. 25 is a diagram showing a keyword ranking table 2500 for all the members in the counting database according to the embodiment. The keyword ranking table 2500 is generated every distribution time of the hanging advertisement or every user's sex and age.

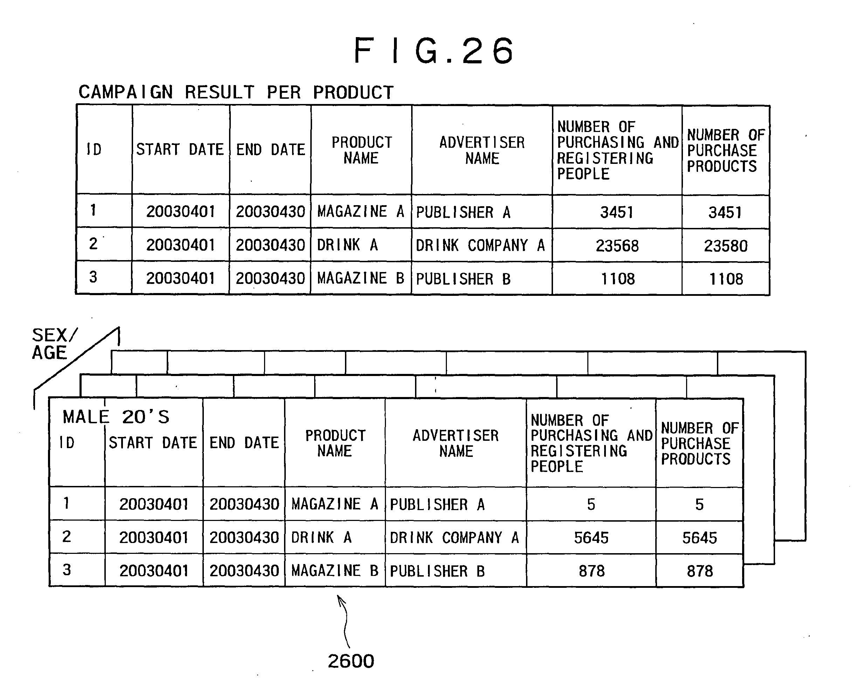

In addition, the number of the obtained points per member (user) is counted by referring to the point table 1930 per member (s2104), and the purchase result every campaign product is calculated (s2105). Fig. 26 is a diagram showing a campaign result table 2600 every product in the database according to the embodiment. As mentioned above, the user property and the number of purchase products per product can be provided to the advertiser as clear data.

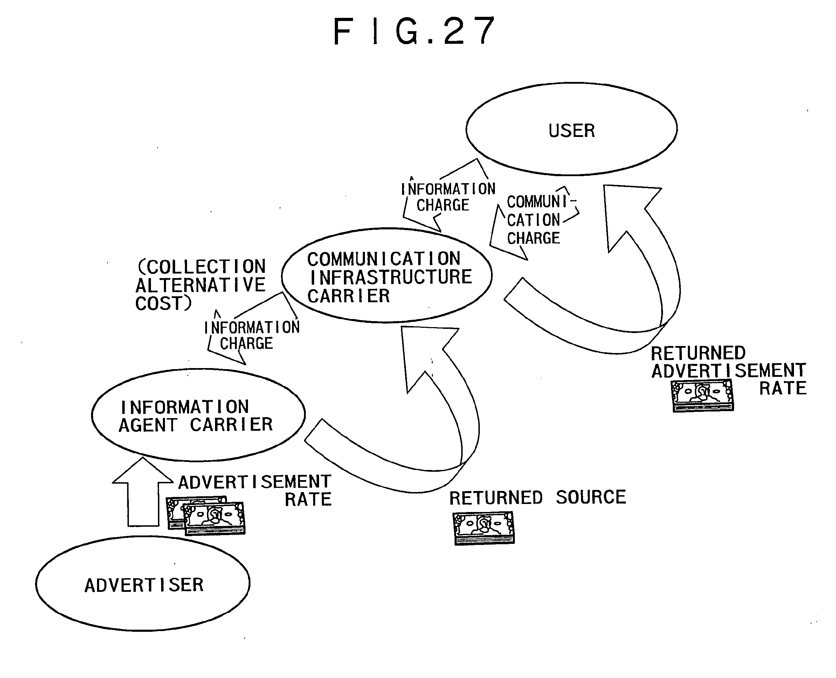

Fig. 27 is a diagram showing the outline of a method for returning the advertisement rate according to the embodiment. According to the embodiment, services can further be provided by use of the log information (history information) per member and information in the point table 1930 per member. Referring to Fig. 27, a business model is shown, in which the source is the advertisement rate paid by the advertiser for appealing the product and the service by the hanging advertisement, to an information agent carrier for operating the information agent server 170.

According to the outline of the business model, a communication infrastructure carrier subtracts the return sum determined to the advertiser of the advertisement information from a communication charge from a communication charge and an information charge required when the user browses and uses the advertisement information from a communication infrastructure (e.g., mobile phone carrier) via the mobile terminal 100. The return source for subtraction corresponds to the source. The communication infrastructure carrier demands the charge obtained by subtracting the return sum to the user. It is advantageous for the user that the charge such as the communication charge is reduced by easily viewing the advertisement information via the mobile terminal 100 such as the mobile phone. The efficiency for percentage point of reach for the advertisement information to the user is improved and the advertiser can perform efficient advertisement strategy. For the communication infrastructure carrier, the income of the communication charge is increased by browsing the advertisement information many times without the burden of the return original. The information agent carrier assures various fees as the income and spreads and develops the advertisement management method of the present invention. The return sum may be provided to the user as the point which can be replaced with the service and the product.

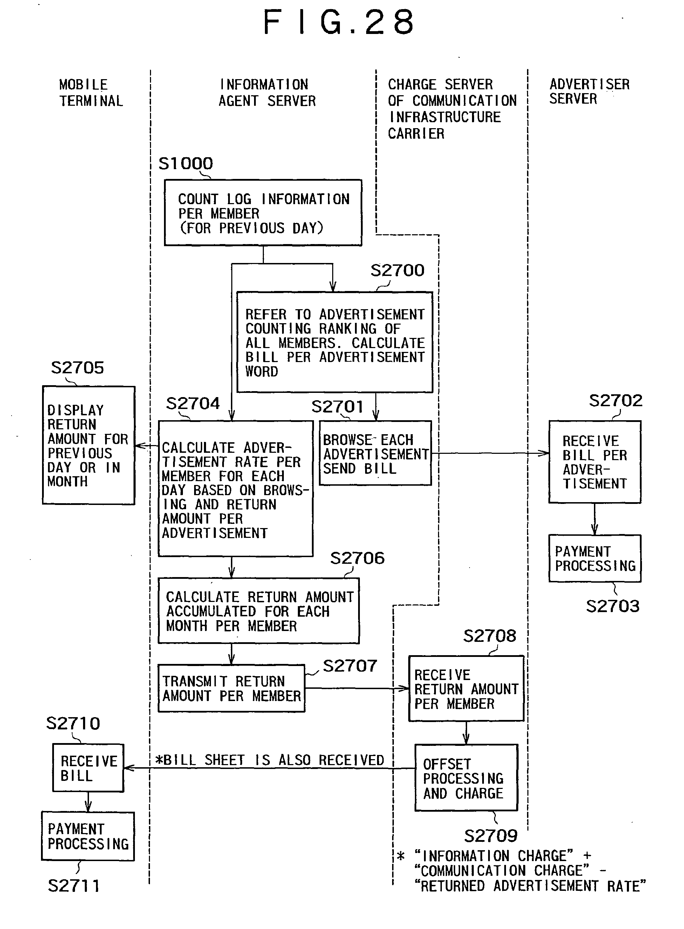

Next, a description is given of specific processing sequence of the abovementioned business model. Fig. 28 is a flowchart showing the processing routine for the processing for returning the advertisement rate according to the embodiment. The flow of the processing starts from step s1000 in Fig. 10, namely, processing for counting the log information per member (at the previous day). As described above, the server 170 which counts the log information per member refers to the ranking for counting the advertisements of all the members (refer to Fig. 22), and calculates the charge amount (advertisement rate) which is demanded to the advertiser per advertisement (advertisement information) (s2700).

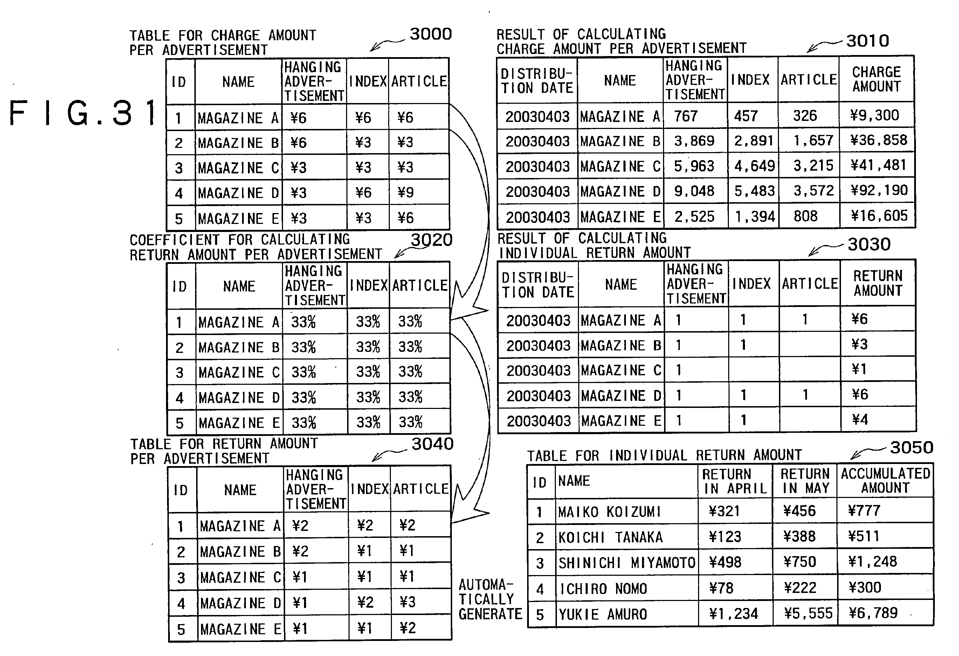

Upon the calculation, a unit price of the charge amount per advertisement in a table 3000 for the charge amount per advertisement (Fig. 31) may be multiplied to the number of logs of the ranking. Then, a result 3010 of calculating the charge amount is generated per advertisement. The result 3010 of calculating the charge amount per advertisement is sent to an advertiser server of the advertiser (s2701). The advertiser server receives the result (s2702), and pays the charge amount to the server 170 or the information agent carrier (s2703).

On the other hand, the return sum needs to be calculated in accordance with the browsing operation of the advertisement of each member. Then, a coefficient per advertisement in a coefficient table 3020 for calculating the return sum per advertisement is multiplied to the charge amount of the advertisement in the table 3000 for the charge amount per advertisement, and a return sum table 3040 is generated per advertisement. For example, the return sum per day is calculated by multiplying the return sum every advertisement in the return sum table 3040 per advertisement to the number of logs every member (s2704). The calculation result of the return sum per log becomes an individual return sum calculating result 3030. The return sum for one month can be calculated by accumulating the return sum per day in each month in a lump (s2706). A table 3050 for individual return sum in Fig. 31 indicates an example of the returned amount calculating result for month per member.

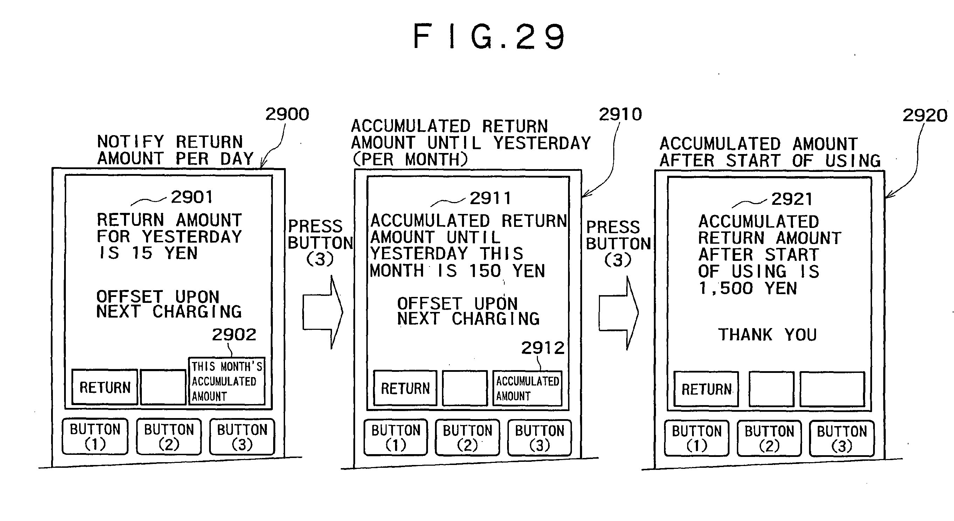

Various return sums calculated above are sent to the mobile terminal 100 and are outputted to the output unit 118 in the mobile terminal 100 (s2705). An output format of the return sum in the mobile terminal 100 is described. Fig. 29 is a screen transition diagram 1 for processing for notifying the return sum according to the embodiment. Referring to Fig. 29, a notifying message 2901 such as "the return sum was 15 yen yesterday" is displayed on a screen (output portion) 2900 of the mobile terminal 100. According to the embodiment, the return sum is displayed by a previous downloading amount except for that at the previous day. The accumulated return sum for one month is displayed, as a notification 2911, on a screen 2910 by pressing a button (3) corresponding to a this-month accumulated sum portion 2902. A notification 2921 of the accumulated returned sum after the start of use is displayed on a screen 2920 by pressing the button (3) corresponding to the accumulating sum portion 2912. The accumulated return sum for one month includes at least one of (1) sum for one month until the previous day and (2) sum for the term of the latest charge. With respect to the sum (2), when the current day is 7th on February and the charge is closed at 20th day, the accumulated return sum from the 21st on January to the 6th on February is displayed.

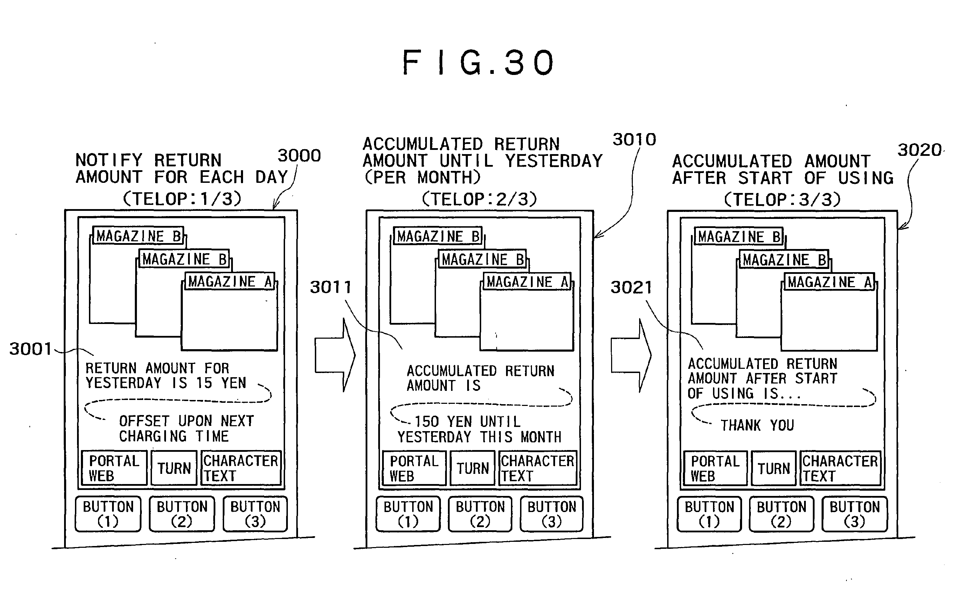

In addition to the abovementioned display format, referring to Fig. 30, the notifications 2901, 2911, and 2921 are displayed as telops. In this case, the telops can automatically be displayed simultaneously with the coming of a predetermined date and time. Alternatively, the notifications 2901, 2911 and 2921 can be outputted in response to an instruction for display operation from the member.

The return sum is transmitted to the mobile terminal 100 and the server 170 transmits the return sum per member to the charge server of the communication infrastructure carrier (s2707). The charge server receives the return sum (s2708), and performs processing of ("communication charge" + "information charge" - "return sum") every member as a client (offset processing). The charge amount subjected to the offset processing is transmitted to the mobile terminal 100 (s2709). The transmission can be executed by use of digital data and, further, the charge amount may conventionally be transmitted by use of sheet medium. The charge amount may be notified by any method. The mobile terminal 100 receives the notification of the charge amount (s2710), and executes payment processing by credit processing to a predetermined account (s2711).

According to the advertisement management method of the present invention, the viewing operation of the hanging advertisement does not need the complicated key operation for the user, and the appeal effect of the advertisement such as the percentage point of reach is improved. When the advertisement in the vehicles such as the hanging advertisement is browsed at a busy moving time, e.g., commuting time, it is possible to properly consider the user's convenience because the complicated key operation is not necessary for the user. Upon the analysis of the advertisement effect and the marketing research by collecting the browsing history on the advertisement information, the sufficient amount of information is easily collected with sufficient frequency. In particular, it is extremely convenient and the burden of a packet communication charge in the mobile phone is not increased. Thus, the user for receiving the advertisement distribution service is easily and certainly acquired.

That is, it is possible to provide an advertisement management method, a mobile terminal, a program, a recording medium, and an advertisement distribution server, in which the advertisement is distributed with high convenience and the advertisement effect is estimated with high accuracy.

The present invention is described in detail according to the embodiment. However, the present invention is not limited to this and can variously be modified without departing the essentials thereof.

According to the present invention, the information can conveniently be distributed.

## Claims

1. An advertisement management method for managing advertisement information by use of a mobile terminal, said advertisement management method comprising the steps of, on said mobile terminal:
detecting coming of a preset timing for distributing an advertisement;
transmitting, to an advertisement distribution server on a network, a request for distributing the advertisement based on preset contents of the and distributed advertisement;
receiving advertisement information distributed from the advertisement distribution server in accordance with said request for distributing the advertisement;
outputting said received advertisement information to an output interface;
receiving, from an input interface, a request for changing an output format of said outputted advertisement information or for obtaining related information;
transmitting said request to said advertisement distribution server;
changing, in accordance with said request, the output format of said advertisement information or receiving said related information from said advertisement distribution server; and
outputting, to the output interface, the advertisement information in said changed output format or said received related information.

2. An advertisement management method according to Claim 1, wherein said advertisement information distributed from said advertisement distribution server is at least one of image data and text data forming a hanging advertisement.

3. An advertisement management method according to Claim 2, wherein an appeal product in the hanging advertisement or article list information as said related information is related to at least one of the image data and the text data of the hanging advertisement as said advertisement information, said advertisement management method further comprising the steps of:
receiving an instruction for displaying said list information as a request for obtaining said related information from the input interface;
transmitting, to the advertisement distribution server, the request of the list information including an ID of the corresponding hanging advertisement in accordance with said display instruction;
receiving the list information corresponding to the ID of said hanging advertisement from said advertisement distribution server;
outputting said received list information to the output interface;
receiving, from the input interface, a request for obtaining information on the appeal product or article information included in said list information;
transmitting said obtaining request to said advertisement distribution server;
receiving, from said advertisement distribution server, the information on the appeal product or the article information in accordance with said obtaining request; and
outputting, to the output interface, the information on said appeal product or the article information.

4. An advertisement management method according to Claim 1, further comprising the steps of:
monitoring an operating state of the mobile terminal and recognizing an occurrence time of the operating state having a predetermined reference or less; and
setting said occurrence time to said timing for distributing the advertisement and detecting coming of the timing.

5. An advertisement management method according to Claim 1, further comprising:
recording said timing for distributing the advertisement to a storage device of the advertisement distribution server and receiving a request for starting said mobile terminal or a request for starting said advertisement management method from said advertisement distribution server which detects the timing for distributing the advertisement; and
starting a predetermined function in response to the request for starting the mobile terminal or the request for starting the advertisement management method.

6. An advertisement management method according to Claim 1, wherein said contents of the distributed advertisement for every user of the mobile terminal is recorded to a storage device of said advertisement distribution server, said advertisement management method further comprising the steps of:
including a user ID of the user of the mobile terminal in said request for distributing the advertisement and transmitting the user ID to the advertisement distribution server; and
receiving the advertisement information in accordance with the contents of the distributed advertisement by the advertisement distribution server which recognizes the contents of the distributed advertisement corresponding to said user ID.

7. An advertisement management method according to any one of Claims 1 to 6, further comprising the steps of:
storing, into a storage device of the mobile terminal, history information on processing for receiving various requests via said input interface or processing in accordance with the receiving processing; and
transmitting said history information to said advertisement distribution server for every starting operation of the mobile terminal or at a predetermined timing during the starting operation.

8. An advertisement management method according to Claim 7, wherein said advertisement information received by the advertisement distribution server is obtained by calculating an attention degree for every advertisement for the user of the mobile terminal based on the history information by the advertisement distribution server which receives said history information and by determining a distribution order or an output format in accordance with the attention degree.

9. An advertisement management method according to Claim 1, further comprising the steps of:
detecting a predetermined timing or a timing for distributing a telop as a time for executing predetermined processing subsequent to the reception of said advertisement information;
transmitting a request for distributing the telop to said advertisement distribution server in accordance with said timing for distributing the telop;
receiving corresponding telop information from said advertisement distribution server which collates said request for distributing the telop with a telop table for determining a relationship between distribution telop information and at least one of time of said timing for distributing the telop, a property of a user of the mobile terminal, and a property of the advertisement information as a target of the telop distribution; and
outputting said telop information to the output interface.

10. An advertisement management method according to Claim 1, further comprising the steps of:
outputting a screen for inputting purchase certification information to the output interface in accordance with a purchase operation of an advertisement product based on said advertisement information;
transmitting, to the advertisement distribution server, product information received via said screen for inputting the purchase certification information or the advertisement information distributed to the mobile terminal;
receiving, from the advertisement distribution server, a corresponding product list formed in accordance with said product information or the advertisement information;
receiving a selection of a product included in said product list;
receiving, from the input interface, an input of the purchase certification information of a corresponding product;
transmitting said selected product and said purchase certification information to the advertisement distribution server;
receiving, from said advertisement distribution server, a processing result of the certification of the purchase certification information or of registration of a point in accordance with the purchase operation, regarding the selected product; and
outputting said received processing result to the output interface.

11. An advertisement management method according to Claim 10, further comprising the steps of:
reading said purchase certification information by a reader function, included in the mobile terminal, of the purchase certification information outputted to a proper medium; and
receiving an input of said purchase certification information from the reader function.

12. An advertisement management method according to Claim 1, further comprising the steps of:
sending an instruction for forming a background image such as a wallpaper or a waiting image on the mobile terminal by the advertisement information or various information related to the advertisement information, to a processing unit of the background image, upon displaying the advertisement information or the various information related to the advertisement information on said output interface; and
outputting, to the output interface, said advertisement information set as the background image or the various information related to the advertisement information.

13. A mobile terminal for managing advertisement information, comprising:
means for detecting coming of a preset timing for distributing an advertisement;
means for transmitting, to an advertisement distribution server on a network, a request for distributing the advertisement based on preset contents of the distributed advertisement;
means for receiving said advertisement information distributed from the advertisement distribution server in accordance with said request for distributing the advertisement;
means for outputting said received advertisement information to an output interface;
means for receiving, from an input interface, a request instruction for changing an output format of said outputted advertisement information or for obtaining related information;
means for transmitting said request and said request instruction to said advertisement distribution server;
means for changing, in accordance with said request instruction, the output format of said advertisement information or receiving said related information from said advertisement distribution server; and
means for outputting, to the output interface, the advertisement information in said changed output format or said received related information.

14. A storage medium for storing a program which enables a mobile terminal to execute a method for managing advertisement information, wherein the program comprises the steps of:
detecting coming of a preset timing for distributing an advertisement;
transmitting, to an advertisement distribution server on a network, a request for distributing the advertisement based on preset contents of the distributed advertisement;
receiving advertisement information distributed from the advertisement distribution server in accordance with said request for distributing the advertisement;
outputting said received advertisement information to an output interface;
receiving, from an input interface, a request instruction for changing an output format of said outputted advertisement information or for obtaining related information;
transmitting said request and instruction to said advertisement distribution server;
changing, in accordance with said request instruction, the output format of said advertisement information or receiving said related information from said advertisement distribution server; and
outputting, to the output interface, the advertisement information in said changed output format or said received related information.

15. A server for distributing advertisement information to a mobile terminal, comprising:
means for receiving a request for distributing an advertisement from a mobile terminal on a network;
means for extracting corresponding advertisement information from a database in accordance with said request for distributing the advertisement;
means for distributing said extracted advertisement information to the mobile terminal;
means for receiving, from the mobile terminal, a request for changing an output format of the advertisement information or for obtaining information related to the advertisement information; and
means for changing, in accordance with said request, the output format of said advertisement information or extracting said related information from the database, and for transmitting the information to said mobile terminal.

16. An advertisement distribution server according to Claim 15, comprising:
means for receiving history information on reception processing of various requests of the advertisement information on the mobile terminal or history information on processing in accordance therewith, from the mobile terminal as a distribution destination of the advertisement information; and
means for calculating an attention degree for every advertisement of a user of the mobile terminal based on said history information and for determining a distribution order or the output format of the advertisement information in accordance with said attention degree.

17. An advertisement distribution server according to Claim 15, further comprising:
means for receiving a request for distributing a telop from the mobile terminal;
means for collating said request for distributing the telop with a telop table for determining a relationship between distribution telop information and at least one of time of said timing for distributing the telop, a property of a user of the mobile terminal, and a property of the advertisement information as a target of the telop distribution and for extracting corresponding telop information; and
means for transmitting said telop information to said mobile terminal.

18. An advertisement distribution server according to Claim 15, further comprising:
means for receiving, from said mobile terminal, product information received via a screen for inputting purchase certification information on the mobile terminal or the advertisement information distributed to said mobile terminal, in accordance with a purchase operation of an advertisement product based on the advertisement information;
means for extracting a corresponding product from a database based on said product information or said advertisement information and forming a product list;
means for transmitting said product list to the mobile terminal;
means for receiving, from the mobile terminal, a product selected from said product list and the purchase certification information of the selected product;
means for performing of authentication of the purchase certification information of said selected product or of point registration in accordance with the purchase operation; and
means for transmitting said processing result to the mobile terminal.

19. An advertisement distribution server according to Claim 15, further comprising:
means for counting said history information with respect to at least one of a user property of the mobile terminal, a property of the advertisement information, distribution time of the advertisement information, receiving time of various requests of the advertisement information, a property of the obtained related information, a property of obtained appeal product information, and a property of article information; and
means for outputting a result of said counting processing.

20. An advertisement distribution server according to Claim 19, further comprising:
means for counting said history information with respect to said purchase certification information.
